(19) 

Europäisches
Patentamt
European
Patent Office
Office européen
des brevets

(11) **EP 4 708 164 A1**

(12) **EUROPEAN PATENT APPLICATION**

(43) Date of publication:
**11.03.2026 Bulletin 2026/11**

(21) Application number: **24199594.3**

(22) Date of filing: **10.09.2024**

(51) International Patent Classification (IPC):
**G06Q 10/0635** (2023.01)    **G06Q 10/20** (2023.01)
**G06Q 50/06** (2024.01)

(52) Cooperative Patent Classification (CPC):
**G06Q 10/0635; G06Q 10/20; G06Q 50/06;**
H02J 3/0012; H02J 2103/30

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Hitachi Energy Ltd
8050 Zürich (CH)**

(72) Inventors:
• **PETER, Lena**
  **67063 Ludwigshafen am Rhein (DE)**
• **KAR, Jishnudeep**
  **Raleigh, NC 27606 (US)**
• **SHIRSAT, Ashwin**
  **Apex, NC 27502 (US)**
• **FAHY, Elise**
  **1162 St-Prex (CH)**
• **KNEZOVIC, Katarina**
  **8006 Zürich (CH)**
• **SUBASIC, Milos**
  **68161 Mannheim (DE)**

(74) Representative: **Vossius & Partner
Patentanwälte Rechtsanwälte mbB
Siebertstrasse 3
81675 München (DE)**

(54) **METHOD FOR AN ELECTRICAL POWER GRID**

(57)     The present disclosure relates to a method for determining at least one weighted parameter, preferably weighted risk score, associated with at least one asset of an electrical power grid, the method comprising: obtaining at least one failure probability of the at least one asset; obtaining at least one weighting parameter associated with the at least one asset; and determining at least one weighted parameter, preferably weighted risk score, associated with the at least one asset based on the at least one failure probability of the at least one asset and the at least one weighting parameter associated with the at least one asset. The present disclosure further relates to a corresponding device and system.

S101 — obtaining at least one failure probability of the at least one asset

S102 — obtaining at least one weighting parameter associated with the at least one asset

S103 — determining at least one weighted parameter, preferably weighted risk score, associated with the at least one asset based on the at least one failure probability of the at least one asset and the at least one weighting parameter associated with the at least one asset

FIG. 1

**EP 4 708 164 A1**

## Description

The present disclosure relates to a method, device, and system for determining at least one weighted parameter, preferably weighted risk score, associated with at least one asset of an electrical power grid.

Weather events can cause damage to a power grid and result in power outages affecting thousands of customers. In response to such weather events, the utilities may begin their event preparedness efforts which includes assessment of inventory, procurement of hardware resources, scheduling of crew, scheduling of help from neighboring utilities to immediately respond to the damages caused by the extreme weather events. However, proactively preparing the power network (including distribution and transmission networks) to better absorb the impact of the extreme event is currently not a prevalent practice that is extensively followed by the power network utilities. Proactive preparedness by having a set of realistic grid scenarios can help improve the operational resilience of the network, which is defined as the ability to prepare for and withstand high-impact low-frequency events by absorbing, adapting, and quickly recovering from their damaging impact [1].

Typically, a utility will monitor the weather forecast and, when a severe weather event is forecasted, try to estimate the potential damage to its power system. The utility will then use this information to begin preparing for potential power outages. Such preparation generally includes assessing inventory, procuring hardware resources, scheduling repair crews, scheduling assistance (e.g., sourcing equipment) from neighboring utilities, and/or the like.

The following illustrates the conventional products and services:

- Statnett's forecast service: The Norwegian Transmission System Operator Statnett has launched a forecast service for weather-dependent failures of power lines [2]. The method is based on fragility curves and comprises two major steps: (1) a long-term failure rate is calculated based on Bayesian inference, taking into account observed failures to ensure that lines having observed relatively more failures will get a relatively higher failure rate; (2) the long-term annual failure rates are distributed into hourly probabilities by modelling the probabilities as a functional dependency on relevant meteorological parameters and assuring that the probabilities are consistent with the failure rates from step (1). In the current model, fragility curves are calculated per line: one that describes the expected failure due to wind vs wind exposure, and one that models the expected failure due to lightning vs lightning exposure. Once the fragility curves are available, the second step consists of combining the weather forecast data to forecast the expected failure rates for all overhead lines. The method uses historical failure rates and the source does not give any indication on whether failure grid scenarios for different, single events are generated.

- ESource resilience service: A vegetation management module is offered which maps the vegetation im-ages to the grid and calculates vegetation risk score to indicate most-at-risk areas [3]. The second offered module is the storm outage module which is a real-time data-driven outage prediction model that deter-mines when and where outages will occur. It is claimed to use vegetation risk indices, terrain and geography data, and inspection history, all integrated with weather prediction models to provide outage prediction up to 24 hours before the storm. No information has been found that asset failure probabilities are used for the resilience assessment.

- ETAP - Storm damage assessment: Under its OMS module, ETAP offers the tool called Storm Damage Assessment. The tool is used in situations where major network damage is present in the event of storm damage (rain, ice, etc.). Customer outage information is collected and reported to the operators from field crews [4]. The key features are the following: Recording and reporting via mobile devices in the hands of field survey personnel who notify scope of the surveyed network damage, storm damage information is displayed on the operator's geospatial network map. The core of the product is damage assessment post event.

However, even when performed before the weather event, these are still reactive measures since they are preparations for repairing the damage to the power grid during or after the event. Knowing the risk of assets exposed to an extreme event beforehand would help utilities in protecting their equipment early and hence to mitigate the damage both to the equipment and the power grid.

Thus, there is a need to improve a method, device, and system for determining at least one weighted parameter, preferably weighted risk score, associated with at least one asset of an electrical power grid.

The present disclosure relates to a method for determining at least one weighted parameter, preferably weighted risk score, associated with at least one asset of an electrical power grid. The method comprises: obtaining at least one failure probability of the at least one asset; obtaining at least one weighting parameter associated with the at least one asset; and determining at least one weighted parameter, preferably weighted risk score, associated with the at least one asset based on the at least one failure probability of the at least one asset and the at least one weighting parameter associated with the at least one asset.

Herein, the term *"obtaining"* may comprise *"receiving"*, *"determining"*, *"computing"*, *"calculating"*, etc.

Herein the term *"risk score"* may be a number indicating the risk of a parameter, preferably imposed on another parameter.

Various embodiments may preferably implement the following features.

Preferably, the at least one weighting parameter comprises a criticality index associated with the at least one asset. Preferably, the criticality index indicates a level of importance of the at least one asset in maintaining a connectivity of the electrical power grid. Herein, the term *"criticality"* and *"saliency"* are interchangeably used.

Preferably, the at least one asset is a plurality of assets, and the plurality of assets of the electrical grid is represented using a plurality of nodes.

Preferably, the obtaining the at least one weighting parameter comprises: determining a plurality of paths, wherein each of the plurality of paths connects two different nodes of the plurality of nodes; determining at least one overlapping portion of the plurality of paths; and determining the at last one weighting parameter based on the determined at least one overlapping portion of the plurality of paths.

Preferably, the method further comprises: obtaining, preferably receiving from a user input or from a database, at least one information associated with the at least one asset; and determining at least one weighted parameter associated with the at least one asset further based on the obtained at least one information associated with the at least one asset.

Preferably, the at least one information is a criticality index.

Preferably, the at least one weighted parameter associated with the at least one asset is a weighted risk score.

Preferably, the method further comprises: determining at least one probability of at least one scenario based on the obtained at least one failure probability of the at least one asset, wherein the at least one asset is a potentially failing asset; determining at least one weighted parameter associated with the at least one asset based on the determined at least one probability of at least one scenario and the at least one weighting parameter associated with the at least one asset.

Preferably, the at least one weighted parameter associated with the at least one asset is a weighted risk score.

Preferably, the at least one scenario is a plurality of scenarios.

Preferably, the method further comprises: assessing at least one of the plurality of scenarios based on the determined at least one weighted parameter; and selecting at least one scenario from the plurality of scenarios based on the assessment and at least one criterion.

Preferably, the assessing assesses a risk of at least one of the plurality of scenarios based on the determined at least one weighted parameter.

Preferably, the at least one failure probability of the at least one asset is determined based on at least one information associated with the at least one asset.

Preferably, the at least one information associated with the at least one asset comprises at least one of a geographical location of the at least one asset and a type of the at least one asset, and preferably a design information of the at least one asset, and more preferably a terrain data and/or a historical failure data of the at least one asset.

Preferably, the at least one failure probability of the at least one asset is determined based on at least one information associated with at least one natural event affecting at least one aspect of the at least one asset.

Preferably, the at least one information associated with the at least one natural event comprises at least one of a geographical location of occurrence of the at least one natural event, a type of the at least one natural event, a measurable parameter associated with the at least one natural event, a historical, simulated, and/or forecast data of the at least one natural event.

Preferably, a measurable parameter associated with the at least one natural event indicates a strength of associated with the at least one natural event.

Preferably, the forecast data of the at least one natural event are a weather data and/or a seismic data.

Preferably, the at least one natural event comprises at least one of a storm, a hurricane, a typhoon, a cyclone, a flood, a wildfire, an ice storm, a lightning storm, an earthquake, and a wind event.

Preferably, the plurality of assets comprises at least one of a distribution pole, a conductor, preferably in an overhead line, a substation, a generator, a tower, preferably a transmission tower, a protective device, a transformer, a reactor, and an electrical load.

Preferably, the method further comprises increasing a robustness of the electrical power grid based on the determined at least one weighted parameter, preferably weighted risk score, associated with the at least one asset.

Preferably, the increasing a robustness of the electrical power grid comprises increasing a robustness of at least one of the plurality of assets.

Preferably, the increasing the robustness of the electrical power grid comprises scheduling the electrical power grid. Herein, the terms *"resilience"* and *"robustness"* are interchangeably used.

Preferably, the scheduling the electrical power grid comprises modifying an operational schedule of the at least one electrical asset in the electrical power grid.

Preferably, the increasing the robustness of the electrical power grid comprises modifying the electrical power grid.

Preferably, the modifying the electrical power grid comprises performing at least one of: replacing, removing, and/or adding at least one component of the at least one the plurality of assets; adding at least one additional asset into the electrical power grid; replacing, maintaining, and/or removing the at least one asset of the electrical powergrid; and modifying the topology of the electrical power grid.

Preferably, the increasing the robustness of the electrical power grid comprises scheduling a maintenance of the electrical power grid.

Various exemplary embodiments of the present disclosure disclosed herein are directed to providing features that will become readily apparent by reference to the following description when taken in conjunction with the accompanying drawings. In accordance with various embodiments, exemplary systems, methods, and devices are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.

## Description of the Drawings

FIG. 1 illustrates a flow chart of a method according to an embodiment of the disclosure.

FIG. 2 illustrates a block diagram of a method according to an embodiment of the disclosure.

FIG. 3 illustrates processing steps of a method according to an embodiment of the disclosure.

FIG. 4 illustrates a flowchart of a method for generating a scenario according to an embodiment of the present disclosure.

Fig. 5 illustrates a flowchart of a method for generating for generating the ranked scenarios according to an embodiment of the present disclosure.

FIG. 6 illustrates an IEEE 123 bus distribution network.

FIG. 7 different locations in Florida where the method according to the embodiment of the present disclosure has been validated using IEEE 123 bus grid.

FIG. 8 a) illustrates a fragility curve determined according to an embodiment of the present disclosure.

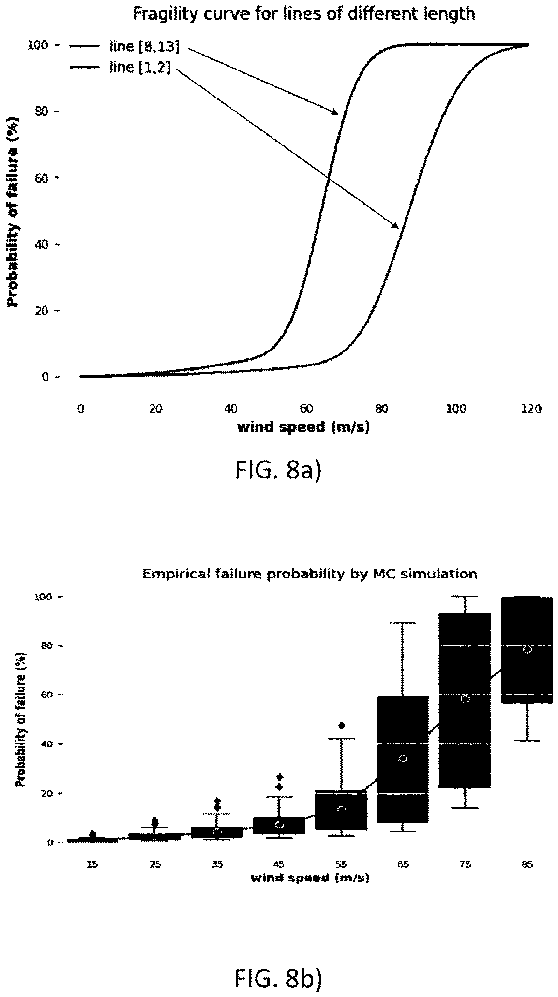

FIG. 8 b) illustrates a distribution of line failures determined according to an embodiment of the present disclosure.

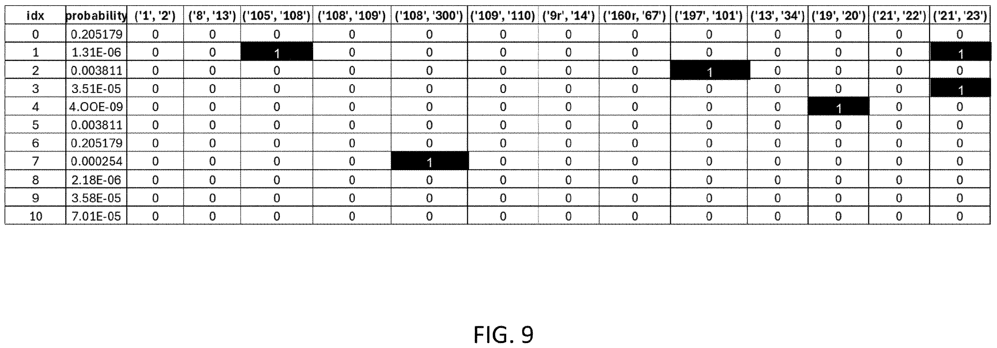

FIG. 9 illustrates a table of scenarios determined according to an embodiment of the present disclosure.

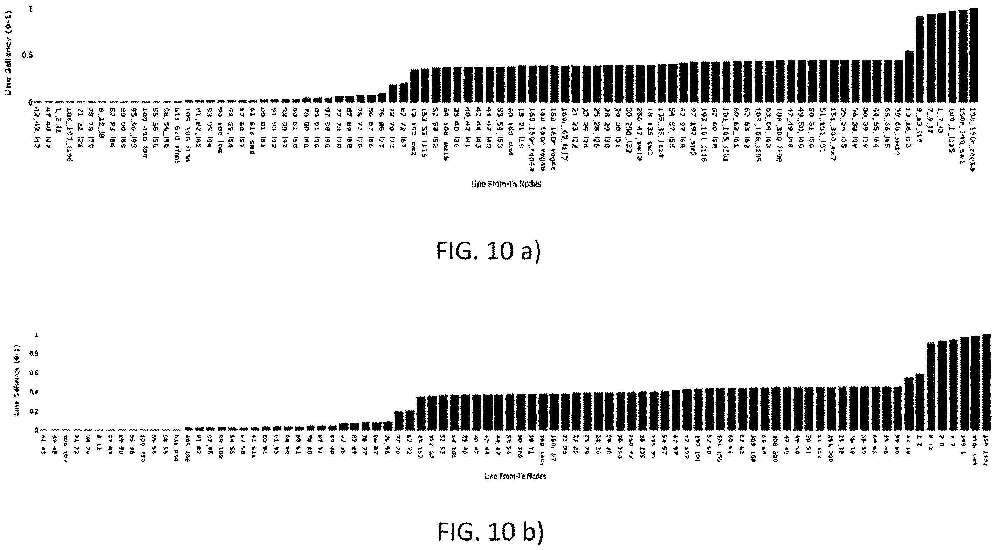

Fig. 10 a) illustrates simulation results of a method according to an embodiment of the present disclosure.

Fig. 10 b) illustrates simulation results of a method according to an embodiment of the present disclosure.

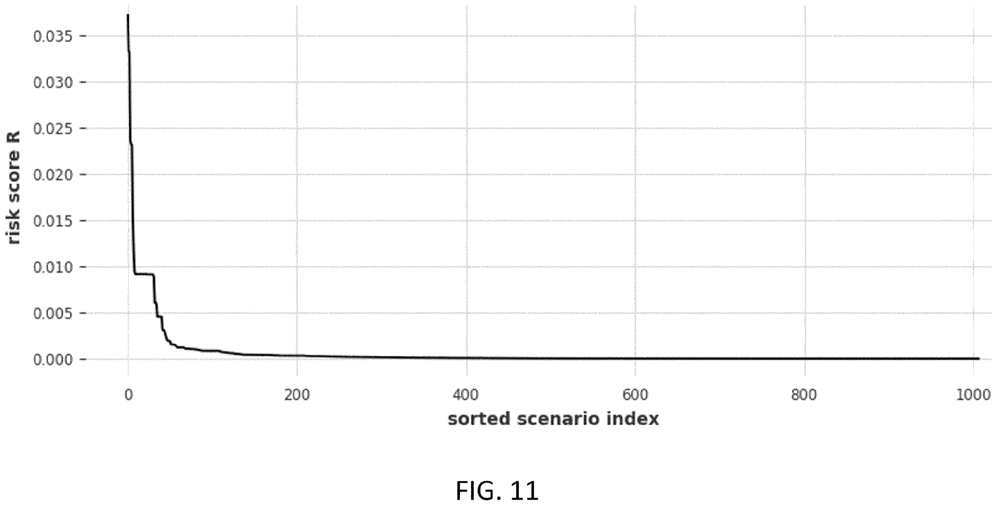

Fig. 11 illustrates simulation results of a method according to an embodiment of the present disclosure.

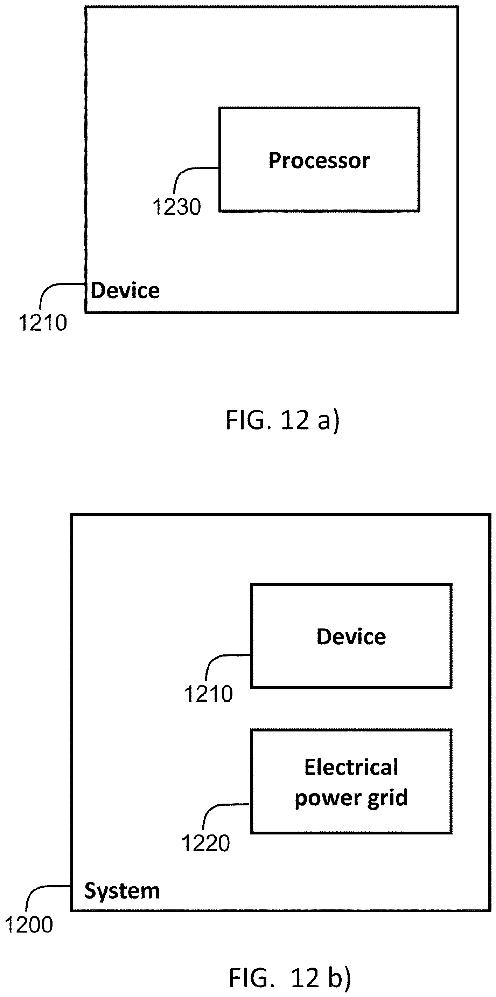

Fig. 12 a) illustrates a device according to an embodiment of the present disclosure.

Fig. 12 b) illustrates a system according to an embodiment of the present disclosure.

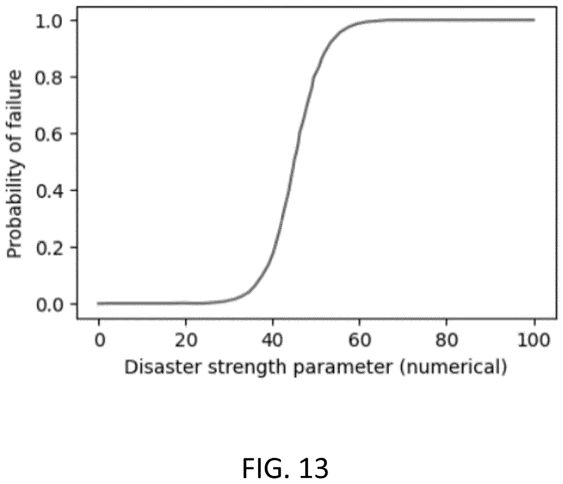

Fig. 13 shows an example of a univariate fragility curve according to an embodiment of the present disclosure.

## Detailed description of the disclosure

In the following, exemplary embodiments of the disclosure will be described. It is noted that some aspects of any one of the described embodiments may also be found in some other embodiments unless otherwise stated or obvious. However, for increased intelligibility, each aspect will only be described in detail when first mentioned and any repeated description of the same aspect will be omitted.

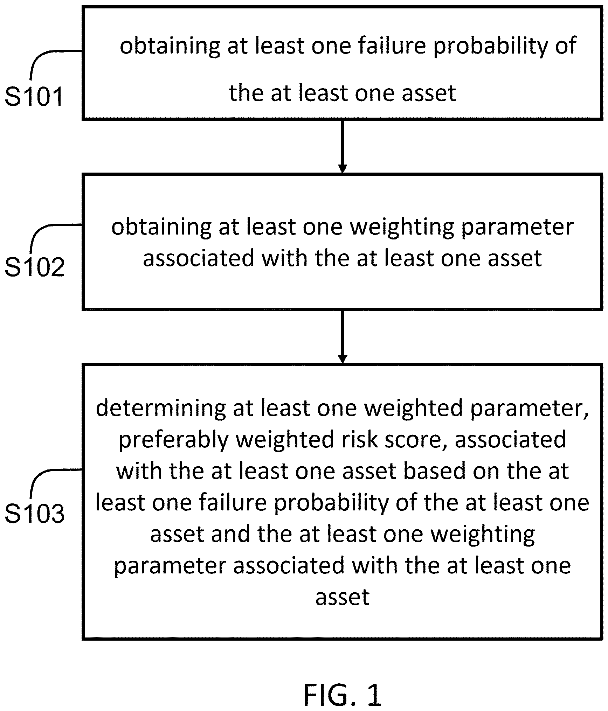

FIG. 1 illustrates a flow chart of a method according to an embodiment of the disclosure.

The present disclosure relates to a method for determining at least one weighted parameter, preferably weighted risk score, associated with at least one asset of an electrical power grid. The method comprises: obtaining at least one failure probability of the at least one asset (S101); obtaining at least one weighting parameter associated with the at least one asset (S102); and determining at least one weighted parameter, preferably weighted risk score, associated with the at least one asset based on the at least one failure probability of the at least one asset and the at least one weighting parameter associated with the at least one asset (S103).

In an embodiment, the at least one weighting parameter comprises a criticality index associated with the at least one asset. In an embodiment, the criticality index indicates a level of importance of the at least one asset in maintaining a connectivity of the electrical power grid. Herein, the term *"criticality"* and *"saliency"* are interchangeably used.

In an embodiment, the at least one asset is a plurality of assets, and the plurality of assets of the electrical grid is represented using a plurality of nodes.

In an embodiment, the obtaining the at least one weighting parameter comprises: determining a plurality of paths, wherein each of the plurality of paths connects two different nodes of the plurality of nodes; determining at least one overlapping portion of the plurality of paths; and determining the at last one weighting parameter based on the determined at least one overlapping portion of the plurality of paths.

In an embodiment, the method further comprises: obtaining, preferably receiving from a user input or from a database, at least one information associated with the at least one asset, preferably the at least one information is a criticality index; and determining at least one weighted parameter, preferably weighted risk score, associated with the at least one asset further based on the obtained at least one information associated with the at least one asset.

In an embodiment, the method further comprises: determining at least one probability of at least one scenario based on the obtained at least one failure probability of the at least one asset, wherein the at least one asset is a potentially failing asset; determining at least one weighted parameter, preferably weighted risk score, associated with the at least one asset based on the determined at least one probability of at least one scenario and the at least one weighting parameter associated with the at least one asset.

In an embodiment, the at least one scenario is a plurality of scenarios.

In an embodiment, the method further comprises assessing, preferably a risk of, at least one of the plurality of scenarios based on the determined at least one weighted parameter; and selecting at least one scenario from the plurality of scenarios based on the assessment and at least one criterion.

In an embodiment, the at least one failure probability of the at least one asset is determined based on at least one information associated with the at least one asset.

In an embodiment, the at least one information associated with the at least one asset comprises at least one of a geographical location of the at least one asset and a type of the at least one asset, and preferably a design information of the at least one asset, and more preferably a terrain data and/or a historical failure data of the at least one asset.

In an embodiment, the at least one failure probability of the at least one asset is determined based on at least one information associated with at least one natural event affecting at least one aspect of the at least one asset.

In an embodiment, the at least one information associated with the at least one natural event comprises at least one of a geographical location of occurrence of the at least one natural event, a type of the at least one natural event, a measurable parameter, preferably indicating a strength of, associated with the at least one natural event, a historical, simulated, and/or forecast data of the at least one natural event, and preferably, a weather data and/or a seismic data .

In an embodiment, the at least one natural event comprises at least one of a storm, a hurricane, a typhoon, a cyclone, a flood, a wildfire, an ice storm, a lightning storm, an earthquake, and a wind event.

In an embodiment, the plurality of assets comprises at least one of a distribution pole, a conductor, preferably in an overhead line, a substation, a generator, a tower, preferably a transmission tower, a protective device, a transformer, a reactor, and an electrical load.

In an embodiment, the method further comprises increasing a robustness of the electrical power grid, preferably by increasing a robustness of at least one of the plurality of assets, based on the determined at least one weighted parameter, preferably weighted risk score, associated with the at least one asset.

In an embodiment, the increasing the robustness of the electrical power grid comprises scheduling the electrical power grid. Herein, the terms *"resilience"* and *"robustness"* are interchangeably used.

In an embodiment, the scheduling the electrical power grid comprises modifying an operational schedule of the at least one electrical asset in the electrical power grid.

In an embodiment, the increasing the robustness of the electrical power grid comprises modifying the electrical power grid.

In an embodiment, the modifying the electrical power grid comprises performing at least one of: replacing, removing, and/or adding at least one component of the at least one the plurality of assets; adding at least one additional asset into the electrical power grid; replacing, maintaining, and/or removing the at least one asset of the electrical power grid; and modifying the topology of the electrical power grid.

In an embodiment, the increasing the robustness of the electrical power grid comprises scheduling a maintenance of the electrical power grid.

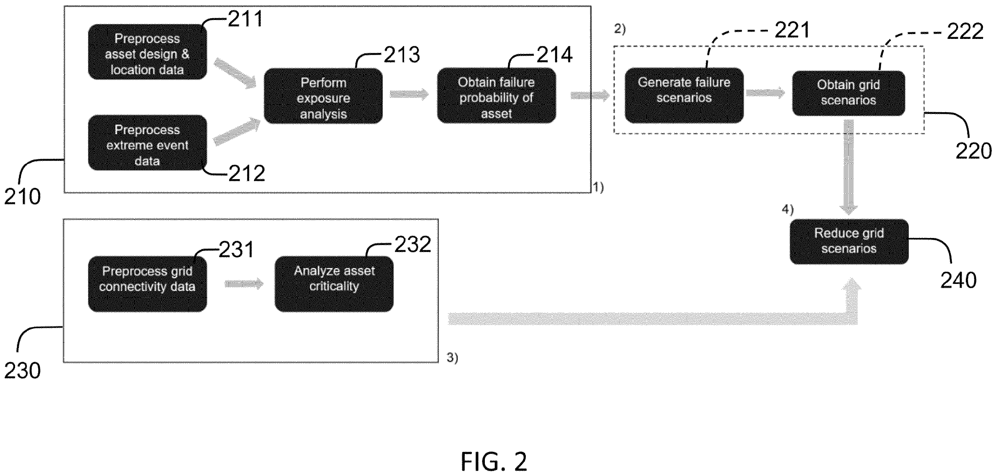

FIG. 2 illustrates a block diagram of a method according to an embodiment of the disclosure.

The method as outlined in Fig. 2 may advantageously achieve, among others, generating a realistic, accurate, precise, and/or relevant risk scenarios of the power grid for an extreme weather event. The risk scenarios can be both, on an asset level, i.e., assessed for individual assets performed considering the information related to the asset and optionally further information such as information relating to the grid, as well as on the system level, i.e., assessed for the system performed considering the system information, particularly the information regarding the grid as well as the assets comprised therein. The method may utilize probabilistic quantifications of asset failures, which can be used to generate failure scenarios with simulation, e.g., using Monte Carlo approach. Further, the method comprises a criticality analysis of assets. According to an embodiment, the method comprises the following steps:

1) Asset risk assessment under extreme event (block 210): In block 210, the asset design, asset location information, and/or data of the extreme weather event may be obtained and pre-processed and used as an input for performing exposure analysis. The obtaining and pre-processing of the asset design and/or asset location information may be performed in parallel with the obtaining and pre-processing of data of the extreme weather event. Based on the pre-processed data, the exposure of the asset to the extreme weather event is assessed. The exposure analysis determines the failure probability of the asset reflecting the failure risk of the asset.

2) Generation of failure scenarios under extreme events (block 220): After obtaining the failure probability of an asset by performing block 210, a set of failure scenarios for the asset of interest is generated by sampling from the failure probability.

3) Assessment of asset criticality (block 230): In block 230, first, grid connectivity data is pre-processed. Based on pre-processed data, the criticality of individual assets with respect to the connectivity of the grid is analyzed.

4) Reduction of grid scenarios (block 240): The obtained grid scenarios from block 220 are combined with the asset criticality results. The resulting output is a reduced set of grid scenarios being both realistic for a chosen weather event as well as relevant in the sense that these scenarios would cause severe connectivity problems in the grid.

In an embodiment, performing block 210 is mandatory for performing the method illustrated in Fig. 2.

In an embodiment, block 210 may be used as a standalone tool or as an input for block 220.

In an embodiment, obtaining at least one failure probability of the at least one asset comprises: receiving, from a user input, the at least one failure probability of the at least one asset; and/or retrieving, from a data base, the at least one failure probability of the at least one asset.

In an embodiment, performing block 220 is mandatory for performing block 240.

In an embodiment, block 220 can also be used as a standalone tool independent of block 240.

In an embodiment, performing block 230 is mandatory for performing block 240, preferably in case no other asset criticality information is provided by the user. In an embodiment, performing block 230 is not mandatory for performing block 240.

In an embodiment, block 230 can be used as a standalone tool completely independent of blocks 210, 220, and/or 240. In an embodiment, block 230 can also be used as a standalone, i.e., block 230 may be used to determine at least one weighted parameter, preferably weighted risk score, associated with at least one asset of an electrical power grid, the block performing: obtaining at least one failure probability of the at least one asset; obtaining at least one weighting parameter associated with the at least one asset; and determining at least one weighted parameter, preferably weighted risk score, associated with the at least one asset based on the at least one failure probability of the at least one asset and the at least one weighting parameter associated with the at least one asset. The at least one criticality information associated with the at least one asset may be determined. The at least one criticality information associated with the at least one asset may be obtained e.g., by the user input or by setting to a predefined value.

In an embodiment, block 240 is optional for determining at least one weighted parameter, preferably weighted risk score, associated with at least one asset of an electrical power grid.

In an embodiment, block 240 requires the output of blocks 210 and 220 as an input.

In an embodiment, block 240 may be performed based on the output of block 230 as an input.

In an embodiment, block 210 and block 230 can be used independently from each other.

In an embodiment, for block 240, the grid scenarios obtained from block 220 are reduced with asset criticality information.

In an embodiment, the required asset criticality information can be either derived from performing block 230 and/or from another source, e.g., provided by the user.

The embodiments disclosed herein consider extreme events such as hurricane and earthquake. However, it is understood by the skilled person in the art that the embodiments herein are also applicable for any natural event affecting any asset of interest.

The following further elaborates the blocks 210 to 240 generally described above.

It is understood by the skilled person in the art that the computational performance, including but not limited to, computational speed, computational accuracy, and/or certainty of blocks 210 to 240 and/or sub-blocks 211 to 214, 221 to 222, and 231 to 232 may improve with increasing number of data as well as increasing types of data available to said blocks and/or sub-blocks. For instance, such increase in performance is realised when preferred and/or more preferred input are available. In case any of the required, expected, preferred, or more preferred input is unavailable for processing by said blocks and/or sub-blocks, any parameter, particularly dependent on the input, may be set to a default value.

The following further elaborates on block 210: Asset risk assessment under extreme event.

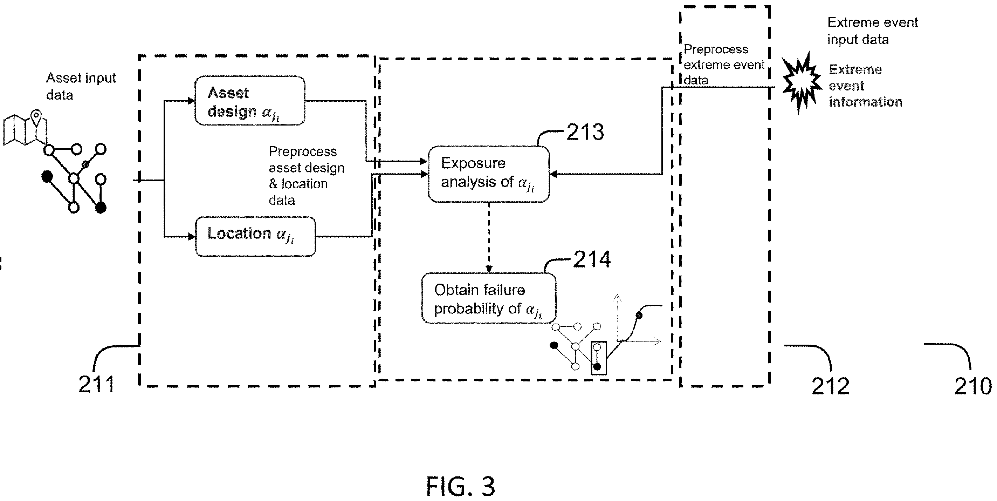

In an embodiment, block 210 may comprise 4 sub-blocks 211 to 214. The first two sub-blocks in 210, i.e., pre-process extreme event data 212 and pre-process asset design and location data 211 may be independent from each other and can be run in parallel. The pre-processed data is then used as input for the two subsequent sub-blocks, i.e., the exposure analysis 213 and the obtain failure probability of asset 214. Fig. 3 illustrates an embodiment of 210. $\alpha_{ji}$ represents the $i^{th}$ instance of asset type $j$. The set $\Omega$ is the set of all assets of interest in the grid i.e., $\Omega = \{\alpha_{ji} \mid \forall\ i, \forall\ j\}$.

The following lists the non-limiting inputs to block 210 according to various embodiments.

In an embodiment, the input comprises at least one of: location (e.g., latitude and longitude); and type of asset (e.g., overhead line, conductor, and so forth). In an embodiment, the input comprises: asset design information (e.g., wooden pole, type of transformer, and so forth). In another embodiment, the input comprises at least one of: additional asset design information (e.g., conductor diameter, height of poles, age of poles, and so forth); terrain data; and historical failure data.

In an embodiment, the extreme event input data comprises at least one of: type of extreme event (e.g., high-wind event, flood, earthquake, and so forth); location of extreme event (latitude, longitude); weather information on the disaster strength parameter (depends on extreme event type and asset type); and timestamps with corresponding location data of extreme event (e.g., path of a storm). In an embodiment, the extreme event input data comprises at least one of: information of any private or contracted weather station in vicinity of the power grid (if not available, the method uses the default weather stations' open-source data. In another embodiment, the extreme event input data comprises probabilistic forecasts of extreme event (e.g., probability distributions/ confidence shapes of storms). In yet another embodiment, the extreme event input data comprises at least one of: historical or empirical failure data for the extreme event type and asset of interest; and fragility curve (if not provided by user, method will fall back on default fragility curves; [5],[6],[7]). Herein, the term *"disaster"* is used to indicate a specific example of a natural event.

In sub-blocks 211 and 212, the input data are brought to a format that can be further processed by the subsequent sub-blocks 213 and 214. Subblocks 213 and 214 are based on probability distributions that link the extreme event information with the failure probability of the asset. If historical or empirical failure data for the type of extreme event and the type of asset are provided by the user (optional), the probability distribution is estimated from that data. If not, the method may use a default fragility curve. The fragility curves represent the conditional probability of failure of a structural element as a function of disaster strength parameters like, e.g., wind speed and precipitation [8]. The fragility curves are further elaborated below. Table 1 illustrates non-limiting examples of the assets of interest and the disaster strength parameters for different types of extreme events for the related assets according to various embodiments.

Table 1: Examples of the power grid assets and disaster strength parameters for different types of extreme events.

| Extreme event | Power grid asset of interest ($\Omega$) | Disaster strength parameter |
|---|---|---|
| High-wind events (storms, hurricanes, typhoons, cyclones) | Distribution poles Conductors | Wind speed, wind direction |
| Floods | Substations, generators | Flood depth, precipitation |
| Wildfires | Conductors in overhead lines, wooden poles, transformers | Fuel aridity index, temperature, smoke density |
| Ice storms | Transmission towers | Ice accretion & wind speed |
| Lightning storms | Transmission towers | Current of strike, wind speed |
| Earthquakes | Towers, generation units, transformers, substations, protective devices | Peak ground acceleration Spectral acceleration |

It is noted that the method presented herein is not limited to the assets and extreme events listed in Table 1. If a failure probability distribution of an asset is available or can be estimated based on historical/empirical data, the methodology presented herein can be applied.

The following further elaborates on sub-block 211: Pre-process asset design data.

In an embodiment, in sub-block 211, the asset design input data is pre-processed. For this, the location of the asset (e.g., from geo-information system, GIS) and the type of asset is extracted. If available, additional design information and terrain data suited for the fragility curve of choice (or the default fragility curve) are selected. For location of asset, if the location is not available for all assets at the required level of granularity, an interpolation is used to fill in the missing location data for those assets. The following illustrates how the interpolation method may be used to get the pole locations in a line.

It is noted, even though method is implemented for poles, it can be applied to any power grid asset.

In this sub-block 211, the assets are initialized with the provided design parameters, and the network is placed on the map using the geographical coordinates available from the utility's GIS (geographic information system) information. Note that, the GIS may or may not have information corresponding to the location of each pole in a line between two buses. In case, the information is available, the pole coordinates ( $x_k^{ij}$ , $y_k^{ij}$ ) are initialized directly from the available data, and the next steps can be skipped. However, in most cases, only the information about the buses is available and the total length of the line is available in the GIS.

Therefore, in such a case, for each line between two bus nodes, poles are placed at an assumed distance, e.g., 50 meters, or specified by the design parameters. It is noted that any other distance can be used for the interpolation. For each pole, the geographical coordinates are interpolated depending on the grid coordinates from and to buses, and the index of the pole. It is assumed herein that the line is a straight line between the two buses, and therefore compute the pole coordinates using linear interpolation. It is further assumed that the coordinates of line $(i,j)$ is given by $(x_i, y_i)$ and $(x_j, y_j)$.

Then, the geographical coordinate of the $k^{th}$ pole denotes as ( $x_k^{ij}$ , $y_k^{ij}$ ) is computed as:

$$x_k^{ij} = x_i + \frac{k}{n_{poles}^{ij}}\left(x_j - x_i\right), y_k^{ij} = y_i + \frac{k}{n_{poles}^{ij}}\left(y_j - y_i\right) \qquad (1)$$

wherein $n_{poles}^{ij}$ is the number of poles between buses $i$ and $j$. The total number of poles in the grid is given by

$$n_{poles} = \sum n_{poles}^{ij} , \forall ij .$$

Each line is divided into sections of conductors between each pole. Therefore, the number of conductors is one less than the number of poles. Each conductor is assumed to have the same design parameters, and the span of the conductor is the same as the distance between the two poles. Depending on the number of phases of the line, the number of conductors between two poles is the same as the number of phases of the line. It is noted that the above method can be used for any asset with missing location information, given that the start and end coordinates are provided, with the number of assets and spacing. In the following, it is described how the information of the poles and conductors are used to perform the risk assessment during extreme events.

The following further elaborates on sub-block 212: Pre-process extreme event data.

In an embodiment, in this sub-block, the relevant extreme event data is initialized. First, the extreme event under consideration is selected, e.g., from a historical database, a forecasted event or a simulated event. Values for the disaster strength parameter of interest, and path or location of the extreme event are obtained by tracking the extreme event over the time span $T_s$ for which the data is available for. The relevant set of timestamps $Ts_{grid}$ are collected based on the proximity of the event to any asset of interest in the grid, and for the set $Ts_{grid}$, the nearest weather station data is collected for each asset of interest corresponding to the extreme weather event. This weather station data is used to construct the disaster strength parameter vector w, which serves as an input to the fragility curves to calculate the failure probabilities. In case of seismic events such as earthquakes, the closest station from which the disaster strength parameter (e.g., seismometers) is used to get the relevant data. Herein, the term "stations" refers to both weather stations and locations measuring seismic information such as seismometers. The following illustrates how this method can be used to pre-process extreme event data for a high-wind event, e.g., a storm.

From the path of the storm, the time span is selected when the path of the eye of the storm is within a certain distance of any node of the grid. The timestamps are considered where any single node of the grid falls within the storm radius of the high-wind event. Let us denote the full set of timestamps of the extreme weather event as $Ts = \{ts_1, ts_2, ts_3, ...\}$. Then the subset of these timestamps $Ts_{grid} = \{ts_m, ts_{m+1} , ... , ts_{m+d}\}$ are those timepoints wherein the extreme weather event was at an impactful distance from any node of the grid. Note that $Ts_{grid}$ would be a continuous set, as the storm progressively comes closer reaching the closest point to the grid and then receding away from the grid.

Once the subset $Ts_{grid}$ is computed, the nearest weather stations to each pole in the grid is calculated. Let us denote the complete set of stations as $Stn_{grid} = \{stn_1, stn_2, ... , stn_l\}$ , wherein $l \le n_{poles}$, since multiple poles can have the same nearest station. For each station in $W_{grid}$, the data corresponding to the disaster strength is retrieved for all the timestamps in $Ts_{grid}$. For a high-wind event, the disaster strength parameters of interest are wind speed, denoted by $v$, and wind direction, denoted by $\theta$, respectively. The disaster strength parameter, from a given station $stn_i$ can be described by the vector $w^{stn_i} = \begin{pmatrix} v^{stn_i} \\ \theta^{stn_i} \end{pmatrix}$. Note that, in case when the resolution of $Ts_{grid}$ does not match the resolution of the station data, data is collected for the timespan indicated by $Ts_{grid}$.

The following further elaborates on sub-block 213: Perform exposure analysis.

In an embodiment, using $Ts_{grid}$ and $Stn_{grid}$, the exposure of the extreme event on the assets on interest is calculated. To compute the exposure on asset $\alpha_{ji} \in \Omega$, the nearest station $stn_k$ to $\alpha_{ji}$ is computed. Therefore, the disaster strength parameter $w^{\alpha ji}$ for asset $\alpha_{ji}$ is given by $w^{\alpha ji} = w^{stnk}$. Note, in some events, the disaster strength parameter might not directly be an input to the fragility curve of the assets, but might need some pre-processing. Therefore, depending on the extreme event, relevant values for each asset of interest needs to be calculated to be used as an input to the fragility curves. Continuing the trend above, the methodology for high-wind events is shown below.

Once the relevant timestamps of the station are collected in the previous stage, the exposure on the assets may be computed. In case of the storms, the exposure to the assets (lines and poles) that are of importance are wind speed and wind angle. To get the wind speed, the wind speed of the station nearest to each pole in the line $ij$ is retrieved. Therefore, at each timestamp $t$, the wind speed array for line $ij$ is stored as $\boldsymbol{V_{ij}}(t) = [v_1^{ij}(t), v_2^{ij}(t), \ldots, v_{n_{poles}^{ij}}^{ij}(t)]$. To compute the wind direction, the angle of the wind with respect to the angle of the line may be computed. First, the angle of the line $\theta_{ij}$ with respect to west to east, is computed using the geographical coordinates of the line $ij$ as follows:

$$\theta_{ij} = \tan^{-1}\left(\frac{x_j - x_i}{y_j - y_i}\right) \qquad (2)$$

Note that the wind direction at weather station $w_m$ given by $\theta^{wm}(t)$ is typically computed with respect to south to north. Therefore, to compute the angle of wind with respect to the line (denoted by $\beta_{ij}^{w_m}$) for any weather station $stn_m \in Stn_{grid}$, the following applies:

$$\beta_{ij}^{stn_m}(t) = 90 - \theta_{ij} + \theta^{stn_m}(t) \qquad (3)$$

To scale this angle $\beta_{ij}^{w_m}(t)$ to [0,90], the following steps are applied:

1)

$$\beta_{ij}^{stn_m}(t) \leftarrow |\beta_{ij}^{stn_m}(t)|,$$

2)

$$\beta_{ij}^{stn_m}(t) \leftarrow remainder(\beta_{ij}^{stn_m}(t), 180),$$

3)

$$\text{if } \beta_{ij}^{stn_m}(t) > 90, \text{ then } \beta_{ij}^{stn_m}(t) \leftarrow 180 - \beta_{ij}^{stn_m}(t)$$

Note that, this angle is computed for the closet weather station corresponding to each pole $p$ in a line, and denoted by $\beta_{ij}^p$, $p = 1, 2, \ldots, n_{poles}^{ij}$. Therefore, similar to the wind speed array, an array for the wind directions at each pole for line $ij$ is created as $\beta_{ij}(t) = [\beta_{ij}^1(t), \beta_{ij}^2(t), \ldots, \beta_{ij}^{n_{poles}^{ij}}(t)]$. The two arrays $\boldsymbol{V_{ij}}(t)$, $\beta_{ij}(t)$ are computed for each timestamps $t \in Ts_{grid}$ and $\forall ij$. These arrays will be used in the next stage to compute the asset failure probability.

The following further elaborates on sub-block 214: Obtain failure probability of asset.

In an embodiment, once the exposure on each asset of interest is obtained, the results from the exposure analysis are used to calculate the failure probability $p_{\alpha_{j_i}}(t)$ of each asset $\alpha_{ji} \in \Omega$ for all timestamps $t \in Ts_{grid}$. First, the disaster strength vector $W^{\alpha ji}(t)$ for asset $\alpha_{ji}$ is computed using the exposure analysis method discussed above. The failure probability is obtained by using $W^{\alpha j i}(t)$ as the argument for the fragility curve of asset $\alpha_{ji}$ as $p_{\alpha_{j_i}}^{fail}(t) = FC_{\alpha_{j_i}}^{design}(W^{\alpha_{j_i}}(t))$. Once the failure probability $p_{\alpha_{j_i}}^{fail}(t)$ is obtained, the maximum value is computed for all $t \in Ts_{grid}$, denoted by $p_{\alpha_{j_i,max}}^{fail}$. The maximum failure probability in the timespan spanned by $Ts_{grid}$ to make sure that for any time point in $Ts_{grid}$ when an asset has the highest exposure, the failure probability corresponding to that is used, as this is when the asset is most likely to fail. The failure probabilities calculated from this step can be used to generate Monte Carlo scenarios, or can be used as a standalone method for failure analysis and prediction of critical assets in the grid, which could help in pre-event planning and reinforcement measures.

When discussing sub-block 213, it was discussed how the arrays $W^{ij}(t) = (v_{ij}(t), \beta_{ij}(t))^T$ for each line in the grid are obtained. For high-wind events, the following methodology for overhead lines is applicable. It is worth noting that the framework can be extended for different types of assets for high-wind events. To get the failure probability of the line $ij$ denoted by $p_{ij}^{fail}(t)$, the fragility curve discussed previously is evaluated as

$$p_{ij}^{fail}(t) = FC_{hw,line}^{design}\left(W^{ij}(t)\right) \qquad (4)$$

For each asset or line ij, the failure probability $p_{ij}^{fail}(t)$ for each $t \in Ts_{grid}$ is computed. Following this, the maximum failure probability for each asset (denoted by $p_{ij,max}^{fail}$) during the time spanned by $Ts_{grid}$ is determined as

$$p_{line\,ij,max}^{fail} = \max_{\forall t \in Ts_{grid}} p_{ij}^{fail}(t) \qquad (5)$$

combining failure rates with occurrence probability (optional).

It is noted that the embodiments of sub-blocks 211 to 214 as disclosed above are described for a single extreme event that can be forecasted, extracted from a historical database or simulated. As described in the embodiment of sub-block 211 above, the fragility curves describe the conditional cumulative distribution function, i.e. $FC_{hw,line}^{design}(w) = P^{design}(line =$ "failure"$|W \le w)$. The joint probability of an asset failure and the disaster strength parameter, e.g. for lines, is given by

$$P^{design}(line = \text{"failure"}, W \le w) = FC_{hw,line}^{design}(w)P(W \le w) \qquad (6)$$

The cumulative distribution function $P(W \le w)$ describes the distribution of the disaster strength parameter, i.e. how likely it is to experience a certain wind speed and wind direction for high-wind events. To get the cumulative distribution function $P(W \le w)$ can be derived from the occurrence probability of an extreme event of a certain severity level, e.g. from climatological forecasting services [9].

The embodiments disclosed herein can be used with the joint probability distribution from eq. (14) instead of using the fragility curve eq. (1). Using eq. (14) for obtaining the probabilities of failures additionally considers the occurrence probability of the extreme weather event.

The following further elaborates on block 220: generation of failure scenarios under extreme events.

In an embodiment, in this block, the obtained failure probabilities are used to generate failure scenarios for individual assets of interest as well as for the whole grid. In an embodiment, the scenarios are generated by sampling from the obtained failure probabilities $p_{ij}^{fail}(t)$ with a nonsequential Monte-Carlo simulation. It is worth noting that other sampling techniques such as, e.g., time-sequential Monte-Carlo simulation or Markov-chain Monte-Carlo simulations could be used.

In an embodiment block 220 is used for determining at least one probability of at least one scenario based on the obtained at least one failure probability of the at least one asset, wherein the at least one asset is a potentially failing asset.

In an embodiment, at least one weighted parameter, preferably weighted risk score, associated with the at least one asset may be determined based on the determined at least one probability of at least one scenario and the at least one weighting parameter associated with the at least one asset.

The following further elaborates on sub-block 221: generate failure scenarios.

In an embodiment, for every asset of interest, failure scenarios are generated using a random number between 0 and 1, denoted by $r_k$, wherein $k$ is the Monte Carlo run index. $n_{scenarios}$ denotes the total number of runs. For all assets $\alpha_{ji} \in \Omega$, if $p^{fail}_{\alpha_i,max} > r_k$, then the asset $\alpha_{ji}$ fails in the $k^{th}$ run, else the asset does not fail. Taking the example of the high-wind event, and the asset of interest as the line between two nodes, if $p^{fail}_{line_{ij},max} > r_k$, then the line fails at the $k^{th}$ run, else the line does not break. This analysis is computed for every line $ij \in$ *lines.*

The following further elaborates on sub-block 222: generate grid scenarios.

In an embodiment, sub-block 222 generates scenarios consisting of combinations of different asset failures in a scenario using the Monte Carlo approach described above, applied to each asset for a scenario. The probability of each scenario is also computed using the individual failure probabilities of each asset in a scenario.

The following lists the non-limiting embodiments of input to sub-block 222.

In an embodiment, the input comprises at least one of: asset information for all assets in $\Omega$, and failure probability of all assets and failure probability of all assets. In a preferred embodiment, the input comprises any assets which have already failed (such assets need to be removed from the scenario generation). In another embodiment, the input comprises a number of threads/processes.

In an embodiment, the grid failure scenarios are determined as follows:

1) Obtain failure probabilities $p^{fail}_{\alpha_{j_i},max}$ for all assets $\alpha_{ji} \in \Omega$, and the list of assets $\alpha_{ji}$.

2) For each asset, for the $k^{th}$ Monte Carlo run, generate a random number $r_{\alpha_{j_i}} \in [0,1]$.

3) If the probability of failure of asset $\alpha_{ji}$ is greater than the random number, then the asset fails. The corresponding entry in the binary failure vector $F^k_{\alpha_{j_i}}$ is set as 1, indicating a failure of the asset in the $k^{th}$ scenario. This step is done for all assets, and the entries in the failure binary vector updated accordingly.

4) The scenario probability of the $k^{th}$ run, $P^k_{scenarios} =$

$$\prod_{\alpha_{j_i} \in fail} \left( p^{fail}_{\alpha_{j_i},max} \right) \prod_{\alpha_{j_i} \in \Omega - fail} \left( 1 - p^{fail}_{\alpha_{j_i},max} \right).$$

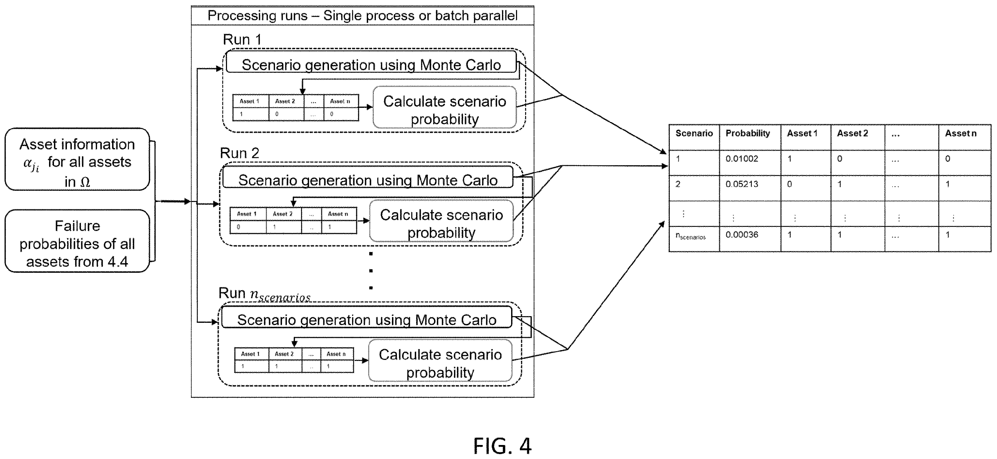

The number of runs $n_{scenarios}$ may be preselected by the user, and the above steps are computed for each run. A flowchart for the execution of the steps is shown in Fig. 4. Note, that the runs can be processed either in a single core or on multiple threads to speed up execution, which could significantly reduce the computational time for large $n_{scenarios}$. The above method can be used for any kind of extreme event to get scenarios and their occurrence probability for various assets of interest. This information can be used further to make both short-term and long-term proactive resilience measures to strengthen weaker parts of the grid to ensure key performance indicators (KPI) thresholds are not violated and customers connected to the grid are served to the largest extent possible.

In some applications, the large number of scenarios $n_{scenarios}$ might not be feasible to make decisions, for example, in the case of stochastic optimal power flow considering line failure probabilities, the problem size may become huge causing a very large solution time. Therefore, to overcome this roadblock, asset criticality information of each asset of interest may be combined with the failure probability of the scenario to get the riskiest scenarios which cause the largest damage to the network in terms of customers lost. The method to obtain the asset criticality, if not already available with the utility, and combining the information with failure scenarios is presented in the following.

The goal of operational resiliency enhancement is to maximize and maintain the connectivity of the different nodes in the distribution network. Extreme weather events typically cause a break in network connectivity (for example, by broken overhead lines during high-wind events), which results in outages. Hence, it is of utmost importance to identify which assets and corresponding network lines are the most critical for maintaining connectivity. Such information can either be provided by the user, or, if not provided, then it can be obtained using the methodology described below.

The following further elaborates on block 230: Assessment of asset criticality.

In an embodiment, in case the criticality information is obtained, e.g., receiving as the user input directly from the user, at least one of the following information is utilized:

1) Location of critical loads;
2) List of distribution network lines deemed critical for network connectivity;

3) Location of critical power delivery assets (for example, location of a critical switch that connects two feeders, transformers serving critical loads, etc.); and

4) A numerical score or ranking of assets that fall under the same class to better quantify the degree of criticality. If this data is not available, the information provided by the user can be processed through Step 2) to numerically quantify the criticality.

Herein, the term *"ranking"* may comprise *"sorting", "organizing", "prioritizing",* etc. It is understood by the skilled person that the disclosed ranking requires at least one comparison of at least two parameters.

Critical lines may be those, if broken, result in a large portion of the network being isolated from the substation. Herein, a portion may be considered large if e.g., a line (i,j) breaks and for instance 2 nodes are disconnected compared to line (m,n) breaking causing 4 nodes to isolate, then (m,n) may be considered more critical. The criticality may be between 0 to 1. The critical lines may be assigned with high criticality indices and non-critical lines may be assigned with low criticality indices. Hence, in this stage, the focus is to use methods from complex graph theory to assign a criticality score for each network line. Other power delivery assets, as deemed critical by the utility, are also to be accounted for during the asset criticality assessment.

In an embodiment, block 230 is used for determining at least one weighted parameter, preferably weighted risk score, associated with at least one asset of an electrical power grid, the block performing: obtaining at least one failure probability of the at least one asset; obtaining at least one weighting parameter associated with the at least one asset; and determining at least one weighted parameter, preferably weighted risk score, associated with the at least one asset based on the at least one failure probability of the at least one asset and the at least one weighting parameter associated with the at least one asset.

In an embodiment, block 230 is performed on an asset level, i.e., performed on individual assets.

In an embodiment, the at least one weighting parameter comprises a criticality index associated with the at least one asset. In a preferred embodiment, the criticality index indicates a level of importance of the at least one asset in maintaining a connectivity of the electrical power grid.

In an embodiment, in case the criticality information is not obtained or available, the criticality score is determined. The determining of the criticality score may comprise pre-processing the network model data; and determining the criticality based thereon, as described below.

The following further elaborates on sub-block 231: Pre-process grid connectivity data.

In an embodiment, for criticality analysis, the grid connectivity data is pre-processed. In an embodiment, said pre-processing involves obtaining the information on the following:

Table 2: Data requirements for asset criticality assessment.

| Data | Requirement (Mandatory/Optional) |
| --- | --- |
| Network substation location | Mandatory |
| Network nodes | Mandatory |
| Network lines | Mandatory |
| Network switches and their on/off status | Mandatory |
| List of critical assets identified by the utility | Optional |
| Numerical quantification of utility-identified critical assets | Optional |

Once the above information is obtained, a network graph can be built, upon which the criticality assessment is performed.

The link salience [10] quantifies the criticality of an individual network line for maintaining the connectivity of the entire network. This approach quantifies the importance of each network line based on the consensus estimate of all the nodes and considers the shortest path tree from a fixed reference node (i.e., the substation) to the rest of the network nodes. Let $\Gamma(n)$ be a binary symmetric $|N| \times |N|$ matrix for the shortest path between the reference node and network node $(n)$, wherein the entries $\gamma_{ij}(n) = 1$ indicate $(i, j)$ belongs to the shortest path for node $n$ The average of the $\Gamma(n)$ matrix is the line saliency matrix, denoted by $\boldsymbol{S}$ with each entry $s_{ij} \in [0,1]$. The higher the value of $s_{ij}$, the higher is its criticality index for maintaining network connectivity. Note that the words criticality and saliency have been interchangeably used, however they are to be interpreted the same.

This approach may be suited for quantifying line criticality for distribution networks. However, it only considers the shortest path and ignores all the other paths. By doing so, some other paths, slightly longer created by other lines and switches, but providing bypass options can be ignored in the criticality analysis, thus giving incorrect criticality values. The embodiment of sub-block 232 overcomes such limitation.

The following further elaborates on sub-block 232: Analyse asset criticality

The following lists the non-limiting embodiments of input to sub-block 232.

In an embodiment, the input to sub-block 232 comprises at least one of: network; topology; all switch information; and substation location. In an embodiment, the input to sub-block 232 comprises: criticality of loads and other assets in the power grids. In another embodiment, the input to sub-block 232 comprises weight parameter for each branch.

In an embodiment, in case any one of the inputs as outlined above, is not obtained, e.g., not provided by the user, specific embodiment no. 1 is performed to determine the criticality values.

In specific embodiment no. 1, determining the line criticality values comprises:

1) obtaining the reference node as the substation node and remove substation node $n_{sub}$ from node set N.

2) Listing all paths between the selected network node (n) and the reference node, including paths involving switches (irrespective of their open/close status), denoted by $\Phi_n$.

3) Calculating the frequency of occurrence of line (i, j) in $\Phi_n$. Let this value be denoted by $\omega_{ij}(n)$. Herein, the phrase "frequency of occurrence of line" may be the number of occurrence of at least portions of the paths overlapping with one another.

4) Updating The $ij^{th}$ entry of $\Gamma(n)$ as the normalized value of $\omega_{ij}(n)$ over the number of total paths in $\Phi_n$.

5) Obtaining, once the matrices $\Gamma(n)$ are calculated for all nodes $n \in N$, enhanced saliency values by taking the average of $\Gamma(n)$ for all nodes $n \in N$.

The each value in S is as defined above. The saliency value is calculated for each phase separately, and therefore the saliency of phase ph is defined as $\boldsymbol{S}_{ph}$. In the above approach, all the lines get an equal weight of 1 if the line appears in the path. However, weights can be associated with each line and the saliency values can be then computed keeping the weights in mind. For example, if a line is designed with higher capacity, then its weight can be increased. This way, lines with higher capacity can be identified to be more critical, since damage to such lines can affect the total flow of power to the nodes that lie downstream of the line. Moreover, this method is not sensitive to the location of a line in the path and can be easily used to identify the critical lines. Being generic in nature, it can be easily extended to different types of networks. This approach tends to assign high saliency value for certain lines adjacent to nodes with low degree, thus making it appropriate for power distribution networks. For example, lines along the feeder backbone that have a low degree will be assigned high saliency since such lines are highly essential for maintaining connectivity with large number of downstream nodes. Lastly, the line criticality values can be assigned to the corresponding nodes that are connected by the line. By doing so, the nodal criticality can be quantified.

Note, the approach described above is suitable for cases wherein each node $n \in N$ has the same criticality. However, in a power grid, certain nodes are more critical due to presence of critical loads or generation assets on them. In this case, it is important to reconsider the saliency values of the lines which are in a path to the critical nodes. The following illustrates an embodiment of the present disclosure, wherein the embodiment considers the knowledge of critical nodes in the power grid.

Specific embodiment no. 1 may be used for obtaining the at last one weighting parameter by performing: determining a plurality of paths, wherein each of the plurality of paths connects two different nodes of the plurality of nodes; determining at least one overlapping portion of the plurality of paths; and determining the at last one weighting parameter based on the determined at least one overlapping portion of the plurality of paths.

In an embodiment, in case any one of the inputs as outlined above is obtained, specific embodiment no. 2 is performed to determine the criticality values.

In specific embodiment no. 2, determining the enhanced line criticality values using information of critical loads comprises:

1) Using the steps discussed previously to obtain the final saliency values $\boldsymbol{S}_{ph}$.

2) For each critical load node $l \in N_{Critical\text{-}Load}$, compute the average of the sum of saliency values of the branches (i, j) in each path in $\Phi_n$. Denote this value as $\overline{S}_{Load}$.

3) If the saliency value of (i, j) is less than $\overline{S}_{Load}$ then replace $\boldsymbol{S}_{ph}(i,j) = \overline{S}_{Load}$

Apart from lines and critical loads, the power networks have other power generation and delivery assets such as distributed generators, service transformers, etc. To assess their criticality from the perspective of distribution network connectivity, the approach above can be easily extended by simply extending the critical load set ($N_{Critical\text{-}Load}$) with the list of nodes at which important power generation and delivery assets are located.

Specific embodiment no. 2 may be used for determining at least one weighted parameter by performing: obtaining, preferably receiving from a user input or from a database, at least one information associated with the at least one asset, preferably the at least one information is a criticality index; and determining at least one weighted parameter, preferably weighted risk score, associated with the at least one asset further based on the obtained at least one information associated with the at least one asset.

For many applications, the large number of Monte Carlo scenarios $n_{scenarios}$ might not be feasible for time bound solutions. For example, if the scenarios are required to implement a stochastic optimal power flow to maximize the customers served, the optimization problem may be extremely large and the problem would require a large solution time. Moreover, it is desirable to rank the scenarios from the riskiest to the least risky ones, so that utilities and operators can select the highly risky scenarios to make decisions regarding the planning and operation of the grid during extreme events. The embodiment of block 240 achieves such effect.

The following further elaborates on block 240: reduction of grid scenarios.

The following lists the non-limiting embodiments of input to block 240.

In an embodiment, the input to block 240 comprises at least one of: failure scenarios, e.g., obtained from sub-block 222; and probability of the scenarios, e.g., obtained from sub-block 222. In an embodiment, the input to block 240 comprises at least one of: ranked criticality information, e.g., with values between 0 and 1, wherein 0 indicating low and 1 indicating highest criticality. In another embodiment, the input to block 240 comprises mapping function f (default as mentioned in (8)).

In an embodiment, in case any one of the inputs as outlined above, is not obtained, e.g., not provided by the user, block 230 may be used to assess the network and generate the criticality values for all assets in the power network.

The following illustrates an embodiment of block 240, wherein the scenarios are reduced. To reduce the scenarios, the scenarios may require to be ranked based on their risk scores, and then choose the top $n_{risk}$ scenarios that need to be considered for the required application. To quantify risk $R$ of a particular scenario $s_i$, $R(s_i)$ is defined as

$$R(s_i) = P^i_{scenarios} * \sum_{\alpha_j \in \Omega} F^i_{\alpha_j} * f\left(\boldsymbol{S}_{\alpha_j}\right) \tag{7}$$

wherein $f(\boldsymbol{S}_{\alpha j})$ is a function to appropriately quantify the risk based on the saliency value $\boldsymbol{S}_j$ of asset $\alpha_j$, and $F^i_{\alpha_j}$ is the failure indicator for asset $\alpha_j$ obtained using specific embodiment no. 1. Typically, $f$ is chosen to be a function such that it enlarges the large criticality values, and diminishes the smaller criticality values. The quantifying function $f$ is chosen as follows:

$$f(\boldsymbol{S}_j) = \begin{cases} -log_2(1 - \boldsymbol{S}_j), 0 \leq \boldsymbol{S}_j < 1 \\ 10, \boldsymbol{S}_j = 1 \end{cases} \tag{8}$$

This is done to ensure that the critical lines are given significantly more risk, e.g., risk score of 4 to 10, than non-critical lines, as, for example, in a distribution system, the critical power lines with higher saliency values are typically the ones closer to the substation and connecting the rest of the network to the substation. Similarly, a critical transformer might be powering several critical loads, and a linear saliency value is not adequate to represent the criticality of that asset. Note that, operators can choose any value of the quantifying function $f$ such that $0 \leq f(\boldsymbol{S}_j) < \infty$ and $f$ is monotonic.

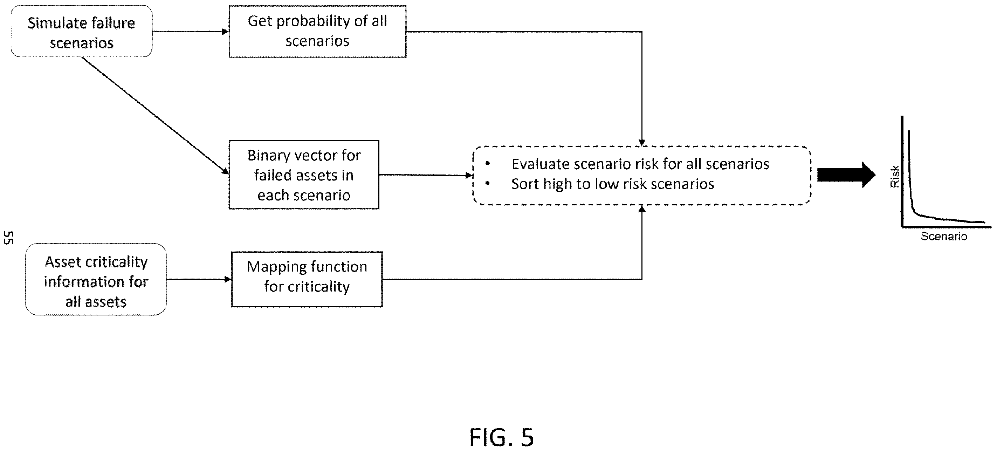

Using the above method, the risk score $R(s_i)$ is computed for all $i \in [1, n_{scenarios}]$. Fig. 5 illustrates a flowchart for generating the ranked scenarios based on the risk scores. Note, as shown in the figure, the goal for this embodiment is to get a monotonically decreasing risk score for the sorted scenarios. It is understood by the skilled person that the ranking may be based on any other sorting method and/or parameters.

In an embodiment, selecting a scenario, preferably a risky scenario, more preferably the most risky scenario, comprises performing at least one of:

1) Determining the number of risky scenarios that can be analyzed; and selecting, given by $n_{trunc}$, from the risk scores, the first $n_{trunc}$ risky scenarios having the largest risk scores.
2) Selecting, given a threshold value of risk $\overline{R}$, the scenarios for which the condition $R(s_i) \geq \overline{R}$ is met, preferably as the top risky scenarios used for further analysis.
3) Determining threshold $\overline{R}$ dynamically, preferably by finding the elbow of the monotonic risk plot. The elbow can be visually selected from the risk plot, or selected by computing the second derivative and finding its maximum absolute value. This method will be demonstrated in the results. For illustrative purposes, the embodiment of 3) is implemented herein.

In an embodiment, block 240 may comprise assessing, preferably a risk of, at least one of the plurality of scenarios based on the determined at least one weighted parameter; and selecting at least one scenario from the plurality of scenarios based on the assessment and at least one criterion.

In an embodiment, any of the embodiments disclosed herein may be used for increasing a robustness of the electrical power grid, preferably by increasing a robustness of at least one of the plurality of assets, based on the determined at least one weighted parameter, preferably weighted risk score, associated with the at least one asset.

In an embodiment, the increasing a robustness of the electrical power grid comprises increasing a robustness of at least one of the plurality of assets.

In an embodiment, the increasing the robustness of the electrical power grid comprises scheduling the electrical power grid. Herein, the terms *"resilience"* and *"robustness"* are interchangeably used.

In an embodiment, the scheduling the electrical power grid comprises modifying an operational schedule of the at least one electrical asset in the electrical power grid.

In an embodiment, the increasing the robustness of the electrical power grid comprises modifying the electrical power grid.

In an embodiment, the modifying the electrical power grid comprises performing at least one of: replacing, removing, and/or adding at least one component of the at least one the plurality of assets; adding at least one additional asset into the electrical power grid; replacing, maintaining, and/or removing the at least one asset of the electrical power grid; and modifying the topology of the electrical power grid.

In an embodiment, the increasing the robustness of the electrical power grid comprises scheduling a maintenance of the electrical power grid.

The following illustrates experimental results of the method disclosed herein according to the foregoing non-limiting embodiments.

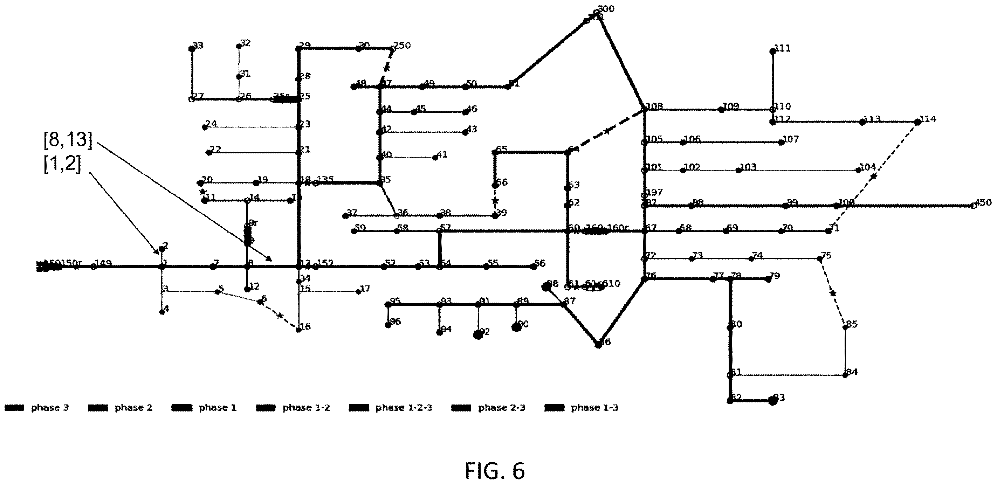

The following demonstrate the method as disclosed herein to generate failure scenarios. For that, the IEEE 123-bus distribution network as shown in Fig. 6 is considered. This test system has 117 lines and 14 network switches. For the experiment, the switches are not considered as assets, and it is assumed that switches do not suffer damage during extreme high wind events. The parameters for lines and poles are taken to be the default parameters as discussed above.

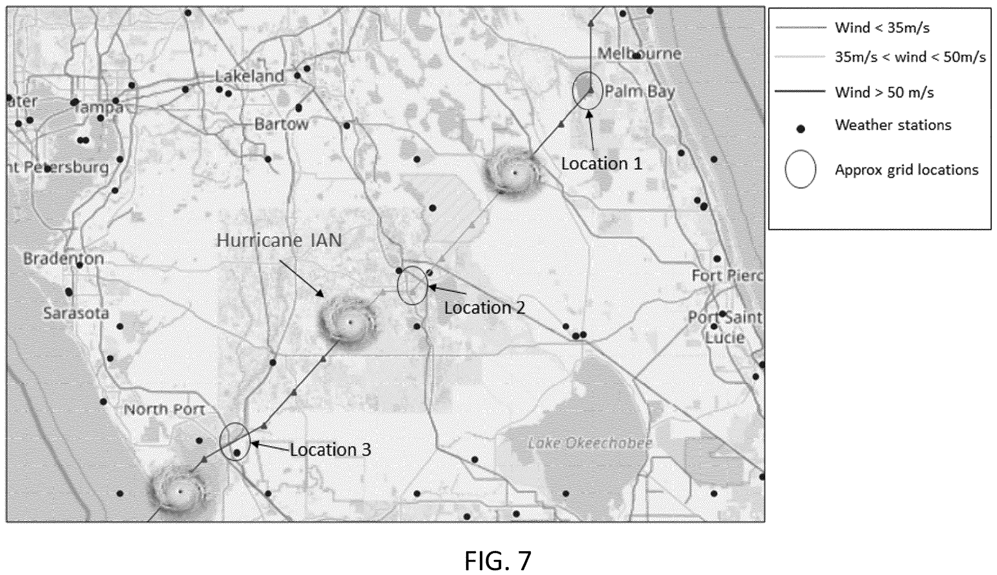

IEEE 123 grid is placed at 3 different locations in the state of Florida, USA as shown in Fig. 7. For testing our proposed methodology of asset vulnerability analysis, hurricane Ian, which was a category 5 hurricane, is considered as the high wind event. The path of the storm was extracted from publicly available data. The grid is placed such that at location 1, the wind speeds are low, increasing till location 3, wherein the wind intensity is the highest. The storm path is shown in Fig. 7.

### Asset Failure Assessment

For the design parameters, the default values from Table 3 were used for this analysis with the fitted GLM parameters from Table 3. The length of the lines was derived from the IEEE 123 test grid.

FIG. 8a) illustrates a fragility curve determined according to an embodiment of the present disclosure. In particular, Fig. 8a) illustrates example fragility curves of two lines, line [8,13] and line [1,2] at a wind attack angle of 90 degrees. The numbers indicated in the square brackets [] indicate two nodes of the electrical power grid being electrically connected using the line therebetween. Line [8,13] is a 3 phase line, and line [1,2] is a single phase line, as shown in Fig. 4. For line [8,13], at a given wind speed, the probability of failure is higher than [1,2]. This is due to the increased probability of pole failure due to 3 conductors on each pole on line [8,13], and also line [8,13] being a longer line compared to line [1,2]. FIG. 8b) illustrates a distribution of line failures determined according to an embodiment of the present disclosure. In particular, Fig. 8b) illustrates the results from the Monte Carlo simulations according to an embodiment of the present disclosure. It shows the distribution of line failures averaged over all lines in the network for different threshold wind speeds. The black line shows the average failure probability per wind speed, averaged over all lines. The boxplots show the results for 100 000 Monte Carlo simulations.

### Grid Failure scenarios

The following summarizes the results for the 3 different locations of the grid, and also illustrate a sample output of failure scenario and scenario probabilities from specific embodiment no. 1.

For location 1, the average line failure per scenario is approximately 3 lines/scenario. For location 2, the number increases to 11 lines/scenario and for location 3 the line failure is 18 lines/scenario. This shows how the embodiments disclosed herein relating to exposure analysis and scenario generation tool successfully incorporate more line failures in each scenario for increasing strength of the extreme weather event. FIG. 9 illustrates a table of scenarios determined according to an embodiment of the present disclosure. In particular, the table on Fig. 9 illustrates a sample output with 10 scenarios and only 13 lines for the IEEE 123 bus system at location 3. The first column is the scenario index. The second column is the scenario probability computed using specific embodiment no. 1, and column 3 onwards, is a binary matrix, wherein 1 indicates a line failure for the line name, and 0 implies no line failure in that run.

**Asset criticality analysis: Criticality assessment**

The asset criticality analysis for the IEEE 123 bus system is performed using specific embodiment no. 1, listed under block 230. The results of this analysis are shown in Fig. 10 a). It is observed that the line criticality values are closer to 1 for those lines responsible for maintaining the connectivity between the substation and the downstream network nodes. These are the lines which, if broken, would result in a large portion of the network being isolated from the substation. On the contrary, the lines which have alternative bypass routes, because of the presence of network switches, have been assigned a lower criticality score. Lastly, the lines towards the network edges that do not have any network nodes downstream of them have been assigned a criticality score of 0. The results of this method assume all nodes have equal level of importance. Hence, had there been a critical load located at node 2, the line connecting nodes 1 and 2 would be assigned a criticality score of 0.

To incorporate nodal importance, specific embodiment no.2 may be implemented, which is a a different embodiment to embodiment no. 1. It is assumed that a critical load is placed at node 2. The results of this analysis are shown in 10b). From the criticality results, it is observed that the criticality for line connecting nodes 1 and 2 takes the value of 0.5951 (marked in red in Fig. 10 b)). This places the line in the list of top 10 critical lines for maintaining network connectivity for phase B of the network. Thus, specific embodiment no.2 is successfully able to quantify the line criticality by incorporating the degree of im-portance of certain network nodes.

**Asset criticality analysis: Grid scenario reduction using risk**

The following illustrates how the scenario reduction method according to an embodiment, in relation to block 240, is used to reduce the number of scenarios obtained by block 222. As shown in Fig. 11, a sharp change in the tangent to the curve on the risk plot is observed around the sorted scenario index of 70. A buffer of 20 is chosen, for instance for improved certainty and/or security. Accordingly, the truncation index is determined as $n_{trunc}$ = 90. The scenarios having the sorted scenario index less than and equal to $n_{trunc}$ are considered for further analysis or applications.

Fig. 12a) illustrates a device according to an embodiment of the present disclosure. The device 1210 comprises a processor 1230, the processor 1230 being configured to: obtain at least one failure probability of the at least one asset; obtain at least one weighting parameter associated with the at least one asset; and determine at least one weighted parameter, preferably weighted risk score, associated with the at least one asset based on the at least one failure probability of the at least one asset and the at least one weighting parameter associated with the at least one asset.

In an embodiment, the processor 1230 is configured to perform any one of the embodiments disclosed herein.

Fig. 12 b) illustrates a system according to an embodiment of the present disclosure. The system 1200 comprises: an electrical power grid 1220 comprising at least one asset; and the device 1210 according to any one of the embodiments disclosed herein.

The following illustrates specific embodiments implemented to perform the method disclosed herein.

**Fragility curves**

Fragility curves represent the conditional probability of failure of a structural element as a function of disaster strength parameters like wind speed and precipitation. Fig. 13 shows an example of a univariate fragility curve, i.e., the probability of failure is described by one numerical disaster strength parameter, only. It is worth noting that the probability of failure of a structural element can be described by several disaster strength parameters, denoted by multivariate fragility curves. Further, a fragility curve can be composed of several individual fragility curves, for example, the probability of an overhead line can be described by failures in the poles in that line or a conductor failure, for which different fragility curves for the poles and the lines can be combined (for an example, see below).

Fragility curves exist for different types of assets and different types of disaster strength parameters. Depending on the extreme event under consideration, different types of assets/ equipment can be affected by different disaster strength parameters. Fragility curves can be divided into four categories describing how they are constructed: judgmental, empirical, analytical, hybrid and are available for transmission and distribution systems.

The disaster strength parameters are the minimum required data inputs to the method of fragility curves. These are derived from the extreme event input data and the step pre-process extreme event data block 212. If multivariate fragility curves are used that have additional design specification as an input these can be optional inputs to the method to increase the quality of the methodology. If they are not provided by the user, default values from design specification sheets (e.g., [11]) are used. For each extreme event and asset combination, different fragility curves exist, that are based on different disaster strength parameters and potentially design information. The methodology proposed is not limited to a specific choice of fragility curve. Note, for any extreme event, the set of assets of interest is denoted as $\Omega$. For better understanding, the default framework for high-wind events is further described in detail herein.

**High-wind events**

For high-wind events, the proposed disaster strength parameters may be wind speed in m/s (wind speeds measured in other units such as miles/h, km/h are automatically converted to m/s in the methodology) and wind direction in degrees. As a power grid asset of interest, overhead lines are proposed. The fragility curve of interest is a conditional probability distribution in the form

$$FC_{hw,line}^{design}(w) = P^{design}(line = "failure"|W \leq w) \qquad (9)$$

Here, $W = (V, \Theta)$ is a random vector reflecting the disaster strength parameter, wherein V is the continuous random variable describing the wind speed (in m/s) and $\Theta$ indicates the wind direction (in degrees). The line failure is a binary random variable with the states "failure" or "no failure".

Further, it is proposed to model the line failure by failures in (wooden) poles or failures in conductors. A single fragility curve for overhead line failures for high-wind events can be defined by combining the two models, i.e., assuming that an overhead line failure occurs by either a pole failure within that line or the conductor failure within that line (or both), i.e.

$$FC_{hw,line}^{design}(w) = P(line = failure|W \leq w)$$

$$= P^{design}(at\ least\ one\ pole\ fails\ or\ at\ least\ one\ conductor\ fails\ |W \leq w)$$

$$= 1 - \prod_{j=1}^{k}(1 - P^{pole_{design}}(pole_j = "no\ failure"\ |W \leq w))\prod_{l=1}^{n}(1 - P^{cond_{design}}(conductor_l = "no\ failure"\ |W \leq w)) \qquad (10)$$

For the pole failure fragility curve, the following curve is proposed as introduced by [12]

$$P^{pole_{design}}(pole = "failure"|W \leq w) =$$

$$P^{pole_{design}}(pole = "failure"|\binom{V}{\Theta} \leq \binom{v}{\theta}) = \Phi\left(\frac{\ln(v) - \mu(design, \theta)}{\sigma(design, \theta)}\right) \qquad (11)$$

Here, $\Phi$ denotes the Gaussian cumulative distribution function. Further, the *design* parameter for a pole is a tuple $(t, A_c, H)$ containing information about the age of the pole $t$ (between 0 and 100 years), the conductor surface $A_c$ (between 0 and 8 m2) and the height $H$ in m.

The mean $\mu(design, \theta)$ and the standard deviation $\sigma(design, \theta)$ of the distribution are given by (let $m_1 = \mu(design, \theta)$ and $m_2 = \sigma(design, \theta)$):

$$m_i = a_0^i + a_1^i\theta + a_2^i A_c + a_3^i t + a_4^i H + a_5^i\theta^2 + a_6^i A_c\theta + a_7^i A_c^2 + a_8^i t\theta + a_9^i tA_c + a_{10}^i t^2$$

$$+a_{11}^i\theta H + a_{12}^i A_c H + a_{13}^i tH + a_{14}^i H^2 \qquad (12)$$

The parameters $a_j^i$ can be obtained by fitting a Generalized linear model in case data are available (see [12]). If not, the following parameters from the fitted model in [12] can be used:

Table 3: Table of fitted GLM parameters from [12]

| Parameter | $\mu$ | $\sigma$ |
|---|---|---|
| a_0 | 6.71E+00 | 1.59E-01 |
| a_1 | -1.13E-02 | 1.42E-04 |
| a_2 | -7.24E-02 | 1.16E-03 |
| a_3 | 6.59E-03 | -2.38E-03 |
| a_4 | -6.72E-02 | -7.35E-05 |
| a_5 | 4.00E-05 | -6.02E-07 |
| a_6 | -1.30E-03 | 3.49E-06 |
| a_7 | 4.63E-03 | -6.41E-05 |
| a_8 | -1.40E-06 | 4.24E-07 |
| a_9 | -1.67E-05 | 8.28E-07 |
| a_10 | -1.37E-04 | 6.64E-05 |
| a_11 | 2.34E-04 | -2.98E-06 |
| a_12 | 1.69E-03 | -2.17E-05 |
| a_13 | -1.12E-05 | 1.01E-05 |
| a_14 | 5.36E-04 | 1.68E-06 |

For the conductor failure model, the following fragility curve [13], [14] is proposed:

$$P^{cond_{design}}(conductor = "failure" | W \leq w)) = (1 - f_u)p_{f_{w,k}}(w) \qquad (13)$$

wherein $f_u$ denotes the probability that the conductor is underground (typically set to 0.32). The direct wind-induced damage probability of the conductor $p_{fw,k}$ can be modeled by [15]

$$p_{f_{w,k}}(w) = min\left\{\frac{F_{f_{w,k}}(w)}{F_{f_{o,k}}(w)}, 1\right\} \qquad (14)$$

Here, $F_{fw,k}(w)$ denotes the wind force on the conductor, and $F_{fo,k}(w)$ denotes the maximum perpendicular force that the conductor can endure. The wind force on the conductor is given by

$$F_{f_{w,k}}(w) = F_{f_{w,k}}\left(\begin{pmatrix} v \\ \theta \end{pmatrix}\right) = \sqrt{q_0(v)G_{cond}C_{cond}A_c * \sin^2 \theta} \qquad (15)$$

wherein the wind pressure $q_0(v)$ is given by

$$q_0(v) = \frac{1}{2}\tau_{cond}\mu_{cond}v \qquad (16)$$

wherein $\tau$ is the air density correction factor (typically equal to 1), $\mu_{cond}$ is the air mass per unit volume (typically 1.225 [kg/m^3]) and $v$ is the wind speed in m/s. Further, $G_{cond}$ is the conductor response factor (typically set to 0.7), $C_{cond}$ is the drag factor for conductors (typically set to 1.0) and $A_c$ is the exposed conductor surface (in $m^2$), typically computed by $A_c = spanlength * d_{cond}$, wherein $d_{cond}$ denotes the diameter of conductor in m (typical value is 0.0177m) and $spanlength$ is the length of the conductor.

The maximum perpendicular force that the conductor can endure can be described by the tensile strength $TS$ of the conductor (in Newton), divided by a safety factor $sf$, i.e. $F_{f_{o,k}} = \frac{TS}{sf}$

If the tensile strength or the safety factor are not provided by the user, the method uses the default values of $TS$ = 61340.0 and $sf$ = 2.0 [15], [16].

The fragility curve proposed here is a function of the variables shown in Table 4.

Table 4: Optional and mandatory parameters for proposed high-wind fragility curve

| Variable | Description | Source | Default value | Requirement (Mandatory/Optional) |
|---|---|---|---|---|
| $v$ | Wind speed (m/s) | Extreme weather information | - | Mandatory |
| $\theta$ | Wind direction (degrees) | Extreme weather information | - | Mandatory |
| $spanlength$ | Length of conductor (m) | Provided by user/ grid model | - | Mandatory |
| t | Age of poles (years) | Provided by user or default value | 25 | Optional |
| $d_{cond}$ | Diameter of conductor | Provided by user or default value | 0.0177 | Optional |
| $A_c$ | Exposed conductor surface (m$^2$) | Provided by user or default value | $d_{cond}$ * spanlength | Optional |
| $\beta$ | Height of pole (m) | Provided by user or default value | 15.24 | Optional |
| $f_u$ | Probability that the conductor is underground | Provided by user or default value | 0.32 | Optional |
| $G_{cond}$ | Conductor response factor | Provided by user or default value | 0.7 | Optional |
| $C_{cond}$ | Drag factor for conductors | Provided by user or default value | 1 | Optional |
| $\tau$ | Air density correction factor | Provided by user or default value | 1 | Optional |
| $\mu_{cond}$ | Air mass per unit volume (kg/m^3) | Provided by user or default value | 1.225 | Optional |
| $TS$ | Tensile strength (N) | Provided by user or default value | 61340.0 | Optional |
| $sf$ | Safety factor | Provided by user or default value | 2.0 | Optional |

However, if this data is not available or cannot be provided by the user, the method falls back to the mentioned default values, thus being a function of wind speed and wind direction as well as the conductor length. The conductor length can be deducted from the line length from the grid data.

It is worth noting that the methodology is not limited to these fragility curves. Further, other fragility curves can be added, such as fragility curves for overhead lines based on tree debris [14] or fragility curves for steel poles [8]. Further, the failure probabilities do not necessarily need to be derived from fragility curves/ academic literature but could also be derived from another source provided by the user, e.g., based on empirical failure data.

The following further elaborates the sets, indices, symbols, and functions described herein.

Table 5: The description of sets and indices described herein.

| Sets | Description |
|---|---|
| $E$ | Set of network edges. |
| $N$ | Set of network nodes. |

(continued)

| Sets | Description |
|---|---|
| $E_{SW}$ | Set of network switches. |
| $P$ | Set of network phases. |
| $\Phi_n$ | Set of paths linking node $n \in N$ with the substation node $n_{sub}$. |
| $N_{Critical\text{-}Load}$ | Set of critical loads. |
| $ph$ | Network phase $ph \in P$. |
| $n$ | Network node $n \in N$. |
| $P$ | Path $\rho \, \text{E} \, \Phi_n$ interfacing node $n$ and $n_{sub}$. |
| $l$ | Critical load node $l \in N_{Critical\text{-}Load}$. |
| $\Omega$ | Set of assets of interest |

Table 6: The description of variables described herein.

| Name | Description |
|---|---|
| $S_{ph}$ | Matrix with dimension $|N| \times |N|$ for storing line saliency. |
| $\Gamma$ | Matrix of dimension $|N| \times |N| \times |N|$. |
| $S_{Load}$ | Auxiliary variable for computing the critical-load based saliency value. |
| $S_{Load}\{\rho\}$ | Critical load-based saliency value for path $\rho \in \Phi_n$ for load at node $n$. |
| $\overline{S}_{Load}$ | Average value of criticality across all paths interfacing critical load at node $n$ and $n_{sub}$. |
| $v$ | Wind speed (m/s) |
| $\theta$ | Wind direction (degrees) |
| $spanlength$ | Length of conductor (m) |
| $t$ | Age of poles (years) |
| $d_{cond}$ | Diameter of conductor |
| $A_c$ | Exposed conductor surface (m$^2$) |
| $H$ | Height of pole (m) |
| $f_u$ | Probability that the conductor is underground |
| $G_{cond}$ | Conductor response factor |
| $C_{cond}$ | Drag factor for conductors |
| $\tau$ | Air density correction factor |
| $\mu_{cond}$ | Air mass per unit volume (kg/m^3) |
| $TS$ | Tensile strength (N) |
| $sf$ | Safety factor |

Table 7: The description of functions described herein.

| Name | Description |
|---|---|
| $FC_{hw,line}^{design}(w)$ | Fragility curve for high-wind events based on asset design information. Input to function is wind speed and wind direction. |
| $P^{poledesign}(pole = \text{"failure"}|W \le w)$ | Fragility curve for poles (high-wind events) based on asset design information. |
| $P^{conddesign}(conductor = \text{"failure"} |W \le w))$ | Fragility curve for poles (high-wind events) based on asset design information. |

(continued)

| Name | Description |
|---|---|
| $p_{fw,k}(w)$ | Direct wind-induced damage probability of conductor as a function of wind speed and wind direction. |
| $F_{fw,k}(w)$ | Wind force on conductor as a function of wind speed and wind direction. |
| $q_0(v)$ | Wind pressure as a function of wind speed. |
| $F_{fo,k}$ | Maximum perpendicular force a conductor can endure |

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative methods, logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

**List of references:**

[1] M. Hamidieh and M. Ghassemi, "Microgrids and Resilience: A Review," IEEE Access, 2022.

[2] Statnett, 2018. [Online]. Available: https://datascience.statnett.no/2018/04/27/from-idea-to-deployment-a-service-for-estimation-of-failure-probability-on-overhead-lines-based-on-the-current-weather-forecast/.

[3] ESource, "The three Ps of outage management: Prevention, prediction and proactive communication," 2022. [Online]. Available: https://www.esource.com/newsletter/701221obkt/three-ps-outage-management-prevention-prediction-and-proactive-communication.

[4] ETAP, "Storm Damage Assessment," [Online]. Available: https://etap.com/product/storm-damage-assessment.

[5] G. Booker, J. Torres, S. Guikema, A. Sprintson and K. Brumbelow, "Estimating cellular network performance during hurricanes," Reliability Engineering and System Safety, vol. 95, no. 4, pp. 337-344, 2010.

[6] S. Espinoua, M. Panteli, P. Mancarella and H. Rudnick, "Multi-phase assessment and adaptation of power system resilience to natural hazards," Electric Power System Research, vol. 136, pp. 352-361, 2016.

[7] Y. Li and B. R. Ellingwood, "Hurricane damage to residential construction in the US: Importance of uncertainty modeling in risk assessment," Engineering Structures, vol. 28, pp. 1009-1018, 2006.

[8] A. Serrano-Fonota, H. Li, Z. Liao, M. R. Jamieson, R. P. A. Serrano, Panteli and Mathaios, "A comprehensive review and comparison of the fragility curves used for resilience assessments in power systems," IEEEAccess, 2023.

[9] "National hurricane center and central pacific hurricane center - NOAA".

[10] D. Grady, C. Thiemann and D. Brockmann, "Robust classification of salient links in complex networks.," Nature Communications, 201.

[11] S. Jermouni, A. B. Olive, I. A. Iberlucra, M. M. Murcian and F. P. B. A. P. Cicale, "Overhead line methodology - A methodology to design an overhead line," RatedPower, 21 September 2022. [Online]. Available: https://go.ratedpower.com/hubfs/CS-Knowledge%20Base/Methodologies/Overhead%20Line%20Methodology. pdf.

[12] Y. Darestani and A. Shafieezadeh, "Multi-dimensional wind fragility functions for wood utility poles.," Engineering Structures, vol. 183, pp. 937-948, 2019.

# EP 4 708 164 A1

[13] S. Ma, B. Chen and Z. Wang, "Resilience Enhancement Strategy for Distribution Systems Under Extreme Weather Events," IEEE Transactions on Smart Grid, vol. 9, no. 2, 2016.

[14] M. Ouyang and L. Duenas-Osorio, "Multi-dimensional hurricane resilience assessment of electric power systems," Structural Safety, no. 48, pp. 15-24, 2014.

[15] S. Jermouni, B. Oliva, I. Alvarez Iberlucea, M. Murcian, Meyer, P. Cicala, F. Pajares and A. Barroso, "Overhead line Methodology (Ratedpower)," September 2022. [Online]. Available: https://go.ratedpower.com/hubfs/CS-Knowledge%20Base/Methodologies/Overhead%20Line%20Methodology.pdf.

[16] evoenergy, "Overhead Line Distribution Design Manual," 2020. [Online]. Available: https://www.evoenergy.com.au/-/media/evoenergy/documents/manuals/po07132-overhead-line-distribution-design-manual.pdf?la=en&hash=90F5E14B09095BB822D73565D53A7F77A3B8D852.

## Claims

1.  A method for determining at least one weighted parameter, preferably weighted risk score, associated with at least one asset of an electrical power grid, the method comprising:

    obtaining at least one failure probability of the at least one asset;
    obtaining at least one weighting parameter associated with the at least one asset; and
    determining at least one weighted parameter, preferably weighted risk score, associated with the at least one asset based on the at least one failure probability of the at least one asset and the at least one weighting parameter associated with the at least one asset.

2.  The method of claim 1, wherein the at least one weighting parameter comprises a criticality index associated with the at least one asset, preferably indicating a level of importance of the at least one asset in maintaining a connectivity of the electrical power grid.

3.  The method of claim 1 or 2, wherein, the at least one asset is a plurality of assets, wherein the plurality of assets of the electrical grid is represented using a plurality of nodes, and wherein the obtaining the at last one weighting parameter comprises:
    determining a plurality of paths,

    wherein each of the plurality of paths connects two different nodes of the plurality of nodes;
    determining at least one overlapping portion of the plurality of paths; and
    determining the at last one weighting parameter based on the determined at least one overlapping portion of the plurality of paths.

4.  The method of any one of the preceding claims, the method further comprising:

    obtaining, preferably receiving from a user input or from a database, at least one information associated with the at least one asset, preferably the at least one information is a criticality index; and
    determining at least one weighted parameter, preferably weighted risk score, associated with the at least one asset further based on the obtained at least one information associated with the at least one asset.

5.  The method of any one of the preceding claims, the method further comprising:

    determining at least one probability of at least one scenario based on the obtained at least one failure probability of the at least one asset,
    wherein the at least one asset is a potentially failing asset;
    determining at least one weighted parameter, preferably weighted risk score, associated with the at least one asset based on the determined at least one probability of at least one scenario and the at least one weighting parameter associated with the at least one asset.

6.  The method of claim 5, wherein the at least one scenario is a plurality of scenarios, and the method further comprising:

assessing, preferably a risk of, at least one of the plurality of scenarios based on the determined at least one weighted parameter; and

selecting at least one scenario from the plurality of scenarios based on the assessment and at least one criterion.

7. The method of any one of the preceding claims, wherein

the at least one failure probability of the at least one asset is determined based on at least one information associated with the at least one asset,

the at least one information associated with the at least one asset comprises at least one of a geographical location of the at least one asset and a type of the at least one asset, and preferably a design information of the at least one asset, and more preferably a terrain data and/or a historical failure data of the at least one asset.

8. The method of any one of the preceding claims, wherein

the at least one failure probability of the at least one asset is determined based on at least one information associated with at least one natural event affecting at least one aspect of the at least one asset,

the at least one information associated with the at least one natural event comprises at least one of a geographical location of occurrence of the at least one natural event, a type of the at least one natural event, a measurable parameter, preferably indicating a strength of, associated with the at least one natural event, a historical, simulated, and/or forecast data of the at least one natural event, and preferably, a weather data and/or a seismic data .

9. The method of any one of the preceding claims, wherein the at least one natural event comprises at least one of a storm, a hurricane, a typhoon, a cyclone, a flood, a wildfire, an ice storm, a lightning storm, an earthquake, and a wind event.

10. The method of any one of the preceding claims, wherein the plurality of assets comprises at least one of a distribution pole, a conductor, preferably in an overhead line, a substation, a generator, a tower, preferably a transmission tower, a protective device, a transformer, a reactor, and an electrical load.

11. The method of any one of the preceding claims, further comprising increasing a robustness of the electrical power grid, preferably by increasing a robustness of at least one of the plurality of assets, based on the determined at least one weighted parameter, preferably weighted risk score, associated with the at least one asset.

12. The method of claim 11, wherein the increasing the robustness of the electrical power grid comprises:

scheduling the electrical power grid;
modifying the electrical power grid,
wherein preferably the modifying the electrical power grid comprises performing at least one of: replacing, removing, and/or adding at least one component of the at least one the plurality of assets; adding at least one additional asset into the electrical power grid; replacing, maintaining, and/or removing the at least one asset of the electrical power grid; and modifyingthe topology of the electrical power grid; and/or
scheduling a maintenance of the electrical power grid.

13. A device, the device comprising a processor, the processor being configured to:

obtain at least one failure probability of the at least one asset;
obtain at least one weighting parameter associated with the at least one asset; and
determine at least one weighted parameter, preferably weighted risk score, associated with the at least one asset based on the at least one failure probability of the at least one asset and the at least one weighting parameter associated with the at least one asset.

14. The device according to claim 13, wherein the processor is configured to perform any one of claims 1 to 12.

15. A system, the system comprising:

an electrical power grid comprising at least one asset; and
the device according to claim 13 or 14.

S101 — obtaining at least one failure probability of the at least one asset

S102 — obtaining at least one weighting parameter associated with the at least one asset

S103 — determining at least one weighted parameter, preferably weighted risk score, associated with the at least one asset based on the at least one failure probability of the at least one asset and the at least one weighting parameter associated with the at least one asset

FIG. 1

FIG. 2

FIG. 3

EP 4 708 164 A1

FIG. 4

FIG. 5

FIG. 6

[8,13]
[1,2]

phase 3　phase 2　phase 1　phase 1-2　phase 1-2-3　phase 2-3　phase 1-3

FIG. 7

## Fragility curve for lines of different length

FIG. 8a)

## Empirical failure probability by MC simulation

FIG. 8b)

| idx | probability | ('1', '2') | ('8', '13') | ('105', '108') | ('108', '109') | ('108', '300') | ('109', '110) | ('9r', '14') | ('160r, '67') | ('197', '101') | ('13', '34') | ('19', '20') | ('21', '22') | ('21', '23') |
|---|---|---|---|---|---|---|---|---|---|---|---|---|---|---|
| 0 | 0.205179 | 0 | 0 | 0 | 0 | 0 | 0 | 0 | 0 | 0 | 0 | 0 | 0 | 0 |
| 1 | 1.31E-06 | 0 | 0 | **1** | 0 | 0 | 0 | 0 | 0 | 0 | 0 | 0 | 0 | **1** |
| 2 | 0.003811 | 0 | 0 | 0 | 0 | 0 | 0 | 0 | 0 | **1** | 0 | 0 | 0 | 0 |
| 3 | 3.51E-05 | 0 | 0 | 0 | 0 | 0 | 0 | 0 | 0 | 0 | 0 | 0 | 0 | **1** |
| 4 | 4.OOE-09 | 0 | 0 | 0 | 0 | 0 | 0 | 0 | 0 | 0 | 0 | **1** | 0 | 0 |
| 5 | 0.003811 | 0 | 0 | 0 | 0 | 0 | 0 | 0 | 0 | 0 | 0 | 0 | 0 | 0 |
| 6 | 0.205179 | 0 | 0 | 0 | 0 | 0 | 0 | 0 | 0 | 0 | 0 | 0 | 0 | 0 |
| 7 | 0.000254 | 0 | 0 | 0 | 0 | **1** | 0 | 0 | 0 | 0 | 0 | 0 | 0 | 0 |
| 8 | 2.18E-06 | 0 | 0 | 0 | 0 | 0 | 0 | 0 | 0 | 0 | 0 | 0 | 0 | 0 |
| 9 | 3.58E-05 | 0 | 0 | 0 | 0 | 0 | 0 | 0 | 0 | 0 | 0 | 0 | 0 | 0 |
| 10 | 7.01E-05 | 0 | 0 | 0 | 0 | 0 | 0 | 0 | 0 | 0 | 0 | 0 | 0 | 0 |

FIG. 9

FIG. 10 a)

FIG. 10 b)

FIG. 11

**FIG. 12 a)**

**FIG. 12 b)**

FIG. 13

Europäisches
Patentamt

European
Patent Office

Office européen
des brevets

# EUROPEAN SEARCH REPORT

**Application Number**

EP 24 19 9594

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/303810 A1 (GROSS KENNY C [US] ET AL) 3 October 2019 (2019-10-03) * paragraphs [0005] - [0015] * * paragraphs [0038] - [0072] * ----- | 1-15 | INV. G06Q10/0635 G06Q10/20 G06Q50/06 |
| X | BARRETT EMILY L ET AL: "A Risk-Based Framework for Power System Modeling to Improve Resilience to Extreme Events", IEEE OPEN ACCESS JOURNAL OF POWER AND ENERGY, IEEE, vol. 10, 21 October 2022 (2022-10-21), pages 25-35, XP011932246, DOI: 10.1109/OAJPE.2022.3214175 [retrieved on 2023-01-12] * page 25 - page 34 * ----- | 1-15 | |
| X | KANDAPERUMAL GOWTHAM ET AL: "Resilience of the electric distribution systems: concepts, classification, assessment, challenges, and research needs", IET SMART GRID, THE INSTITUTION OF ENGINEERING AND TECHNOLOGY, MICHAEL FARADAY HOUSE, SIX HILLS WAY, STEVENAGE, HERTS. SG1 2AY, UK, vol. 3, no. 2, 24 March 2020 (2020-03-24), pages 133-143, XP006090500, DOI: 10.1049/IET-STG.2019.0176 * page 133 - page 142 * ----- | 1-15 | TECHNICAL FIELDS SEARCHED (IPC) G06Q H02J |

The present search report has been drawn up for all claims

| Place of search | Date of completion of the search | Examiner |
|---|---|---|
| Munich | 24 February 2025 | Giemsa, Falk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 9594

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2025

| Patent document cited in search report | Publication date | Patent family member(s) | Publication date |
|---|---|---|---|
| US 2019303810 A1 | 03-10-2019 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. HAMIDIEH** ; **M. GHASSEMI**. Microgrids and Resilience: A Review. *IEEE Access*, 2022
- *The three Ps of outage management: Prevention, prediction and proactive communication*, 2022, https://www.esource.com/newsletter/701221obkt/-three-ps-outage-management-prevention-prediction-and-proactive-communication
- *Storm Damage Assessment*, https://etap.com/product/storm-damage-assessment
- **G. BOOKER** ; **J. TORRES** ; **S. GUIKEMA** ; **A. SPRINTSON** ; **K. BRUMBELOW**. Estimating cellular network performance during hurricanes. *Reliability Engineering and System Safety*, 2010, vol. 95 (4), 337-344
- **S. ESPINOUA** ; **M. PANTELI** ; **P. MANCARELLA** ; **H. RUDNICK**. Multi-phase assessment and adaptation of power system resilience to natural hazards. *Electric Power System Research*, 2016, vol. 136, 352-361
- **Y. LI** ; **B. R. ELLINGWOOD**. Hurricane damage to residential construction in the US: Importance of uncertainty modeling in risk assessment. *Engineering Structures*, 2006, vol. 28, 1009-1018
- **A. SERRANO-FONOTA** ; **H. LI** ; **Z. LIAO** ; **M. R. JAMIESON** ; **R. P. A. SERRANO** ; **PANTELI** ; **MATHAIOS**. A comprehensive review and comparison of the fragility curves used for resilience assessments in power systems. *IEEEAccess*, 2023

- **D. GRADY** ; **C. THIEMANN** ; **D. BROCKMANN**. Robust classification of salient links in complex networks. *Nature Communications*, 201
- **S. JERMOUNI** ; **A. B. OLIVE** ; **I. A. IBERLUCRA** ; **M. M. MURCIAN** ; **F. P. B. A. P. CICALE**. Overhead line methodology - A methodology to design an overhead line. *RatedPower*, 21 September 2022, https://go.ratedpower.com/hubfs/CS-Knowledge%20Base/-Methodologies/Overhead%20Line%20Methodology. pdf
- **Y. DARESTANI** ; **A. SHAFIEEZADEH**. Multi-dimensional wind fragility functions for wood utility poles. *Engineering Structures*, 2019, vol. 183, 937-948
- **S. MA** ; **B. CHEN** ; **Z. WANG**. Resilience Enhancement Strategy for Distribution Systems Under Extreme Weather Events. *IEEE Transactions on Smart Grid*, 2016, vol. 9 (2)
- **M. OUYANG** ; **L. DUENAS-OSORIO**. Multi-dimensional hurricane resilience assessment of electric power systems. *Structural Safety*, 2014, vol. 48, 15-24
- **S. JERMOUNI** ; **B. OLIVA** ; **I. ALVAREZ IBERLUCEA** ; **M. MURCIAN** ; **MEYER, P. CICALA** ; **F. PAJARES** ; **A. BARROSO**. *Overhead line Methodology (Ratedpower)*, September 2022, https://go.ratedpower.com/hubfs/CS-Knowledge%20Base/-Methodologies/Overhead%20Line%20Methodology.pdf
- Overhead Line Distribution Design Manual. 2020